# EUROPEAN PATENT APPLICATION

(11) **EP 1 152 384 A1**
(43) Date of publication of application: **07.11.2001**
(21) Application number: 00939058.4
(22) Date of filing: 14.06.2000
(51) Int. Cl.: G08G 5/00, G01C 21/24

(54) **FLYING OBJECT OPERATING SYSTEM**

(30) Priority: 06.12.1999 JP 34598999
(71) Applicant: MITSUBISHI DENKI KABUSHIKI KAISHA, Tokyo 100-8310 (JP)
(72) Inventor: KAMEYAMA, Shumpei, c/o Mitsubishi Denki K. K., Tokyo 100-8310 (JP); HIRANO, Yoshihito, c/o Mitsubishi Denki K. K., Tokyo 100-8310 (JP); WADAKA, Shusou, c/o Mitsubishi Denki K. K., Tokyo 100-8310 (JP); KISE, Wakasa, c/o Mitsubishi Denki K. K., Tokyo 100-8310 (JP)
(74) Representative: Nicholls, Michael John
(86) International application number: JP0003862
(87) International publication number: WO0143106

(57) **Abstract**

A course of action to be taken by one or more flying objects (2) is determined on the basis of a data base in which data obtained in the past through observation of the meteorology of a star (1) with a meteorological observation apparatus (5) mounted on the flying object (2), courses of action thereafter taken by the flying object, and events encountered by the flying object as the results of taking the courses of action are related to each other, and which is held as common data for the one or more flying objects, thereby enabling stable speedy navigation of the flying object. The data base is provided in a base station (3), and transmitting and receiving of data between the flying object (2) and the base station (3) are performed over a communication line (4).

## Description

This is a continuation of International Application PCT/JP00/03862, with an international filing date of June 14, 2000, the contents of which are hereby incorporated by reference.

### TECHNICAL FIELD

This invention relates to a flying object navigation system and, more particularly, to a flying object navigation system for determining a course of action taken for stable speedy navigation of a flying object.

### BACKGROUND ART

Conventional flying object navigation systems of this kind are represented by a system for navigating a flying object, such as an airplane, on the basis of information from a weather radar or the like installed on the ground or mounted on a satellite, and a system enabling navigation in one airplane on the basis of information obtained by observation with a meteorological observation apparatus through electric waves or light waves, e.g., wind velocity data obtained by observation with an air turbulence detecting apparatus mounted on the airplane.

However, in the conventional system for navigating a flying object such as an airplane on the basis of information from a weather radar or the like installed on the ground or mounted on a satellite, it is extremely difficult to detect an event which occurs suddenly in the vicinity of the flying object, e.g., air turbulence and to enable the flying object to take a course of action to avoid an event in the above-mentioned event.

No system has been around which comprises, as a function in common with a plurality of flying objects, a function for predicting plunging of each flying object into the above-mentioned event occurring suddenly in the vicinity of the flying object from information obtained before the event, e.g., wind velocity data obtained in advance by observation in a case where air turbulence exists before the flying object.

Therefore, this invention is intended to obtain a flying object navigation system in which a meteorological observation apparatus mounted on a flying object makes meteorological observations, and in which a course of action to be taken by the flying object is determined on the basis of a data base in which data obtained by observation in the past, courses of action thereafter taken by the flying object, and events encountered by the flying object as the results of the courses of action are related to each other, and which is held as common data for one or more flying objects, thus enabling stable speedy navigation of the flying object optimized even with respect to an event which occurs suddenly.

### DISCLOSURE OF INVENTION

The present invention is a flying object navigation system comprising a base station capable of storing information provided as common information for navigation of at least one flying object existing as a navigation object, the base station transmitting to the flying object necessary data from the information for determining a course of action to be taken by the flying object, on the basis of observation data from meteorological observation means for observing the meteorology of a space region in which the flying object is flying, the base station transmitting the necessary data by using communication means connected to the flying object. This system makes it possible to rapidly detect even an event which occurs suddenly in the vicinity of the flying object, e.g., air turbulence, and to enable the flying object to efficiently take a course of action for avoiding such an event, thus navigating the flying object with stability.

The present invention comprises the flying object that has the meteorological observation means, transmitting means for transmitting, to the base station, observation data obtained through observation by the meteorological observation means, and receiving means for receiving necessary data for determining a course of action to be taken, the necessary data being transmitted from the base station by using the communication means. Therefore, the meteorology in the vicinity of the flying object can be closely observed.

Further, according to the present invention, the base station has a memory for storing data sets constituted of all observation data obtained in the past through observation by the meteorological observation means, records of courses of action taken by the flying object on the basis of the observation data, and records of events encountered by the flying object as a result of the records of the courses of action. From common data thus prepared and from observation data newly obtained through observation by the meteorological observation means, an event which may be encountered by the flying object after the observation can be easily predicted.

Also, according to the present invention, when new data sets are produced, the new data sets are successively stored in the memory and the data base is reconstructed by combining old data sets and the new data sets successively stored, so that the accuracy of prediction of events which may be encountered by the flying object from observation data can be further improved.

### BRIEF DESCRIPTION OF THE DRAWINGS

Fig. 1 is a diagram showing the configuration of a flying object navigation system according to Embodiment 1 of the present invention;
Fig. 2 is a diagram showing an example of data sets in flying object navigation systems according to Embodiments 1 to 9 of the present invention;
Fig. 3 is a diagram showing an example of a data base in the flying object navigation systems according to Embodiments 1 to 9 of the present invention;
Fig. 4 is a diagram showing another example of the configuration of the flying object navigation system according to Embodiment 1 of the present invention;
Fig. 5 is a diagram showing still another example of the configuration of the flying object navigation system according to Embodiment 1 of the present invention;
Fig. 6 is a diagram showing the configuration of a flying object navigation system according to Embodiment 2 of the present invention;
Fig. 7 is a diagram showing another example of the configuration of the flying object navigation system according to Embodiment 2 of the present invention;
Fig. 8 is a diagram showing still another example of the configuration of the flying object navigation system according to Embodiment 2 of the present invention;
Fig. 9 is a diagram showing the configuration of a flying object navigation system according to Embodiment 3 of the present invention;
Fig. 10 is a diagram showing another example of the configuration of the flying object navigation system according to Embodiment 3 of the present invention;
Fig. 11 is a diagram showing still another example of the configuration of the flying object navigation system according to Embodiment 3 of the present invention;
Fig. 12 is a diagram showing the configuration of a flying object navigation system according to Embodiment 4 of the present invention;
Fig. 13 is a diagram showing the configuration of a flying object navigation system according to Embodiment 5 of the present invention;
Fig. 14 is a diagram showing the configuration of a flying object navigation system according to Embodiment 6 of the present invention;
Fig. 15 is a diagram showing the configuration of a flying object navigation system according to Embodiment 7 of the present invention;
Fig. 16 is a diagram showing the configuration of a flying object navigation system according to Embodiment 8 of the present invention; and
Fig. 17 is a diagram showing the configuration of a flying object navigation system according to Embodiment 9 of the present invention.

### BEST MODE FOR CARRYING OUT THE INVENTION

### Embodiment 1

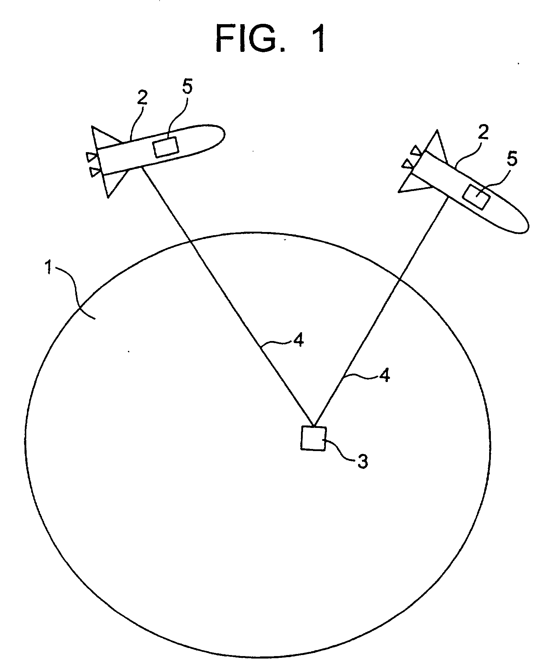

A flying object navigation system according to Embodiment 1 of this invention which is one of the best modes for carrying out the invention will be described with reference to Figs. 1 through 4. Fig. 1 is a configurational diagram showing the flying object navigation system according to Embodiment 1 of this invention. In Fig. 1, reference numeral 1 denotes a star, reference numeral 2 a flying object, reference numeral 3 a base station, reference numeral 4 a communication line, and reference numeral 5 a meteorological observation apparatus mounted on the flying object 2.

The signification of the word "star" used in this specification of the present invention comprises those of words designating any kinds of star, e.g., the earth, the moon and Mercury.

Also, the signification of the word "flying object" used in this specification of the present invention comprises those of words designating everything flying in a space surrounding the star 1, e.g., space rockets, spacecrafts, satellites, and airplanes.

Further, the signification of the word "meteorology" used in this specification of the present invention comprises those of any words relating to a space surrounding the star 1, e.g., wind velocity, density, constituent, humidity, temperature, and gravity.

Referring to Fig. 1, the flying object 2 has the meteorological observation apparatus 5 mounted thereon. The meteorological observation apparatus 5 may be placed inside the flying object 2 or externally mounted on the flying object 2. The meteorological observation apparatus 5 has functions for making observations on the star 1 with respect to one or at least two of the significations of the words included in the above-mentioned signification of "meteorology". The meteorological observation apparatus 5 is mounted on the flying object 2 to produce an effect of observing the meteorology in the vicinity of the flying object 2 in more detail. The meteorology to be observed is not limited to information obtained at a moment. It may comprise successive changes of a meteorological object with time.

Referring to Fig. 1, the flying object 2 and the base station 3 are connected by the communication line 4. The flying object 2 has a function of transmitting observation data obtained by observation with the meteorological observation apparatus 5 to the base station 3 over the communication line 4.

The communication line 4 may be a wired channel using electric waves, sound waves or light waves as communication means, or a wireless channel using such communication means. If wireless communication is performed, antennas, not shown in the figure, may be provided on the flying object 2 and the base station 3.

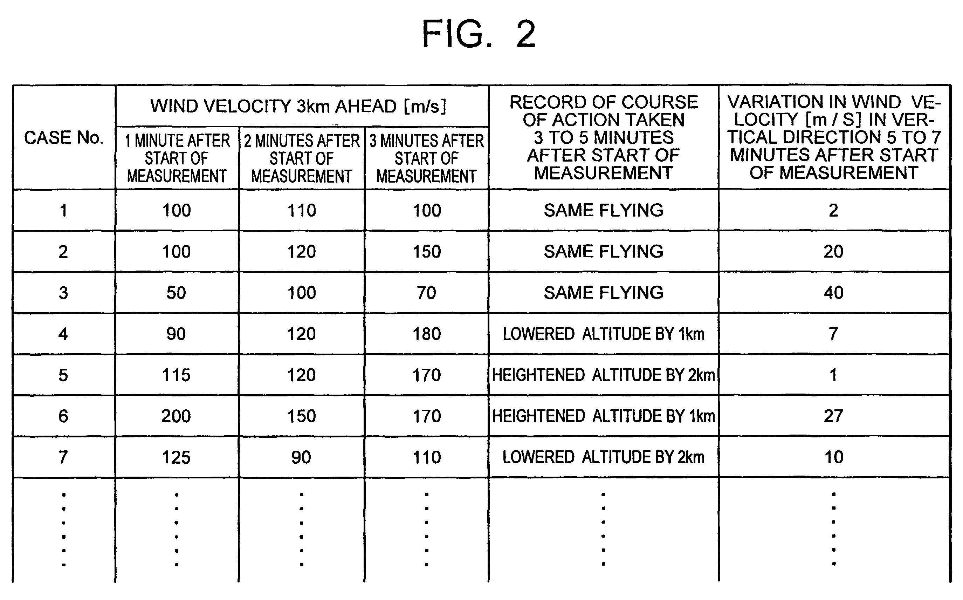

In the base station 3, data sets constituted of all observation data obtained in the past by observation with the meteorological observation apparatus 5 mounted on the flying object 2, records of courses of action taken by the flying object 2 on the basis of the observation data, and events encountered by the flying object 2 as the results of the action records are stored on a memory, although this storage is not illustrated. Fig. 2 shows an example of the data sets. The example of the above-described data sets shown in Fig. 2 relates to a case where observation data is the velocity of wind 3 km ahead of the flying object 2 in the flying direction is measured 1 minute, 2 minutes, and 3 minutes after a start of measurement, the above-mentioned action records correspond to courses of action taken by the flying object 2 3 to 5 minutes after the start of the measurement, and the events encountered by the flying object 2 as the results of the action records correspond to the ranges of variation in the wind velocity in the vertical direction caused 5 to 7 minutes after the start of the measurement. Such data sets are obtained to enable prediction of events which may be encountered by the flying object 2 after the observation from the observation data obtained by the observation with the meteorological observation apparatus 5.

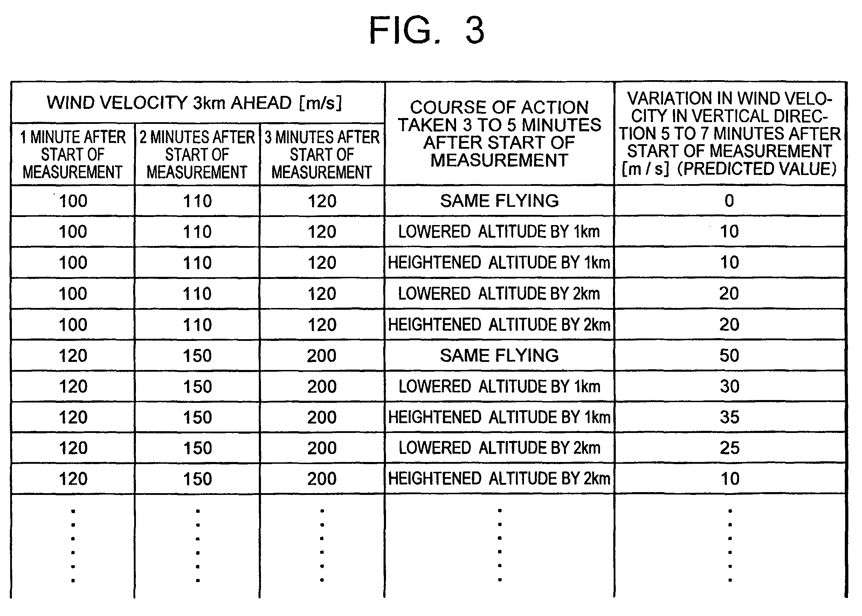

Also, the base station 3 has a data base which is formed on the basis of the contents of the above-described data sets stored on the memory, and in which observation data obtained by observation with the meteorological observation apparatus 5, courses of action taken by the flying object 2 after the meteorological observation, and events encountered by the flying object 2 are related to each other. Fig. 3 shows an example of the above-described data base with respect to a case where observation data is the velocity of wind 3 km ahead of the flying object 2 in the flying direction is measured 1 minute, 2 minutes, and 3 minutes after a start of measurement, the above-mentioned action records correspond to courses of action taken by the flying object 2 3 to 5 minutes after the start of the measurement, and the events encountered by the flying object 2 as the results of the action records correspond to the ranges of variation in the wind velocity in the vertical direction caused 5 to 7 minutes after the start of the measurement. Such a data base is obtained to facilitate prediction of events which may be encountered by the flying object 2 after the observation from the observation data obtained by the observation with the meteorological observation apparatus 5.

Also, the base station 3 has functions of receiving over the communication line 4 observation data obtained by observation with the meteorological observation apparatus 5, making a search to ascertain which case in the data base the received observation data corresponds to, and predicting the relationship between a course of action taken by the flying object 2 and an event encountered by the flying object 2 as a result of taking the course of action.

Also, the base station 3 has a function of transmitting prediction results to the flying object 2 over the communication line 4. On the other hand, the flying object 2 has a function of receiving the prediction results over the communication line 4. The flying object 2 can therefore take a course of action on the basis of the prediction results such as to achieve the most stable and speedy navigation.

Also, the base station 3 has functions of successively storing, on the memory, data sets constituted of observation data obtained by observation with the meteorological observation apparatus 5, a record of a course of action taken by the flying object 2 on the basis of the observation data, and an event actually encountered by the flying object 2 as the result of the action record, and reconstructing the above-described data base from data sets obtained by combining the older data sets and the new data sets successively stored. This function makes it possible to further improve the accuracy of prediction using the data base belonging to the base station 3.

Referring to Fig. 1, the base station 3 is located on the surface of the star 1. The base station 3, however, may be in a state of floating in the air or flying instead of being located on the surface of the star 1. Further, the base station 3 may be mounted on the flying object 2.

In Fig. 1 are also illustrated two flying objects 2 connected to the base station 3. However, the number of flying objects 2 may be 1 or any number larger than 1. If the number of flying objects 2 connected to one base station 3 is larger, the extent of space through which navigation can be controlled by one base station 3 is increased.

The operation of the flying object navigation system shown in Fig. 1 will next be described.

First, the objective meteorology is observed with the meteorological observation apparatus 5 mounted on each flying object 2, and observation data is transmitted to the base station 3 over the communication line 4.

Next, the base station 3 receives over the communication line 4 the observation data obtained by observation with the meteorological observation apparatus 5, makes a search to ascertain which case in the above-described data base the received observation data corresponds to, and predicts the relationship between a course of action thereafter taken by the flying object 2 and an event encountered by the flying object 2 as a result of taking the course of action.

In prediction of one event encountered by each flying object 2, the meteorology observed with the meteorological observation apparatus 5 and used for prediction is not limited to one condition, e.g., the wind velocity and may comprise two or more conditions.

Next, the results of prediction of events which may be encountered by each flying object 2 are transmitted to the flying object 2 over the communication line 4. Then each flying object 2 can be navigated to perform stable speedy flying on the basis of the results of prediction of the relationship between each course of action taken by the flying object 2 and the event encountered by the flying object 2 as a result of taking the course of action.

Records of courses of action taken by the flying object 2 and events thereafter encountered actually by the flying object 2 are successively transmitted to the base station 3 over the communication line 4.

Then the base station 3 successively stores, on the memory, data sets constituted of observation data obtained by observation with the meteorological observation apparatus 5, a record of a course of action taken by the flying object 2 on the basis of the observation data, and an event actually encountered by the flying object 2 as the result of the action record, and reconstructs the above-described data base from updated data sets obtained by combining the older data sets and the new data sets successively stored. In this manner, the accuracy of the results of prediction of events which may be encountered by the flying object 2 from observation data can be improved.

In the above-described example, a pilot who operates the flying object 2 is needed to enable the flying object 2 to take a course of action. According to the present invention, a control signal may be transmitted from the base station 3 to the flying object 2 over the communication line 4 to operate the flying object 2, thereby preventing occurrence of human error in control by a pilot.

The above-described flying object navigation system according to Embodiment 1 of the present invention navigates one flying object 2 or two or more flying objects 2 on the basis of the above-described data base held as common data for the flying objects 2, and is therefore capable of accurate prediction of events encountered by the flying objects 2.

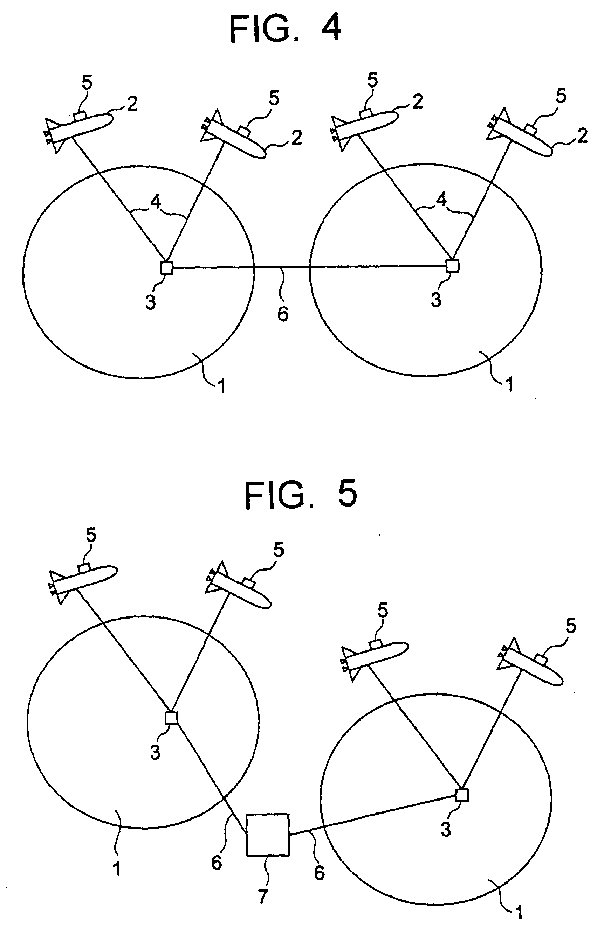

The above-described flying object navigation system according to Embodiment 1 of the present invention may be provided on a plurality of different stars 1. Figs. 4 and 5 show a case where the flying object navigation system according to Embodiment 1 of the present invention is provided on a plurality of different stars 1. In Figs. 4 and 5, reference numeral 6 denotes a base station interconnection communication line. In Fig. 5, reference numeral 7 denotes a central base station, which is a satellite, for example.

Referring to Fig. 4, the base stations 3 on the stars 1 may be connected to each other by a wireless or wired base station interconnection communication line 6 to enable common use of the data sets and the data base, thereby further extending the controllable range of navigation of flying objects 2.

As shown in Fig. 5, such a system may also have the central base station 7 in a space surrounding one star 1, on the surface of one star 1 or in outer space. The central base station 7 and each of the base stations 3 existing on the plurality of stars 1 are connected to each other by the wireless or wired base station interconnection communication line 6. Every time the data sets and the data base stored in each of the base stations 3 are updated and reconstructed, they are transmitted to the central base station 7 over the communication line 6. The central base station 7 transmits the received data sets and data base to all the base stations 3. In this manner, the controllable range of navigation of flying objects 2 can further be extended.

As described above, the flying object navigation system according to Embodiment 1 of the present invention has a plurality of flying objects, a base station connected to the flying objects by a communication line, and meteorological observation means for observing the meteorology, makes observations of the meteorology with the meteorological observation means, provides in the base station a data base in which observation data obtained by observation in the past, courses of action taken by the flying objects after meteorological observations, and events encountered by the flying objects as the results of taking the courses of action, are related to each other, holds the data base in common for the plurality of flying objects, and determines courses of action to be taken by the flying objects on the basis of the data base, thus enabling stable speedy navigation of the flying objects optimized even with respect to an event which occurs suddenly.

### Embodiment 2

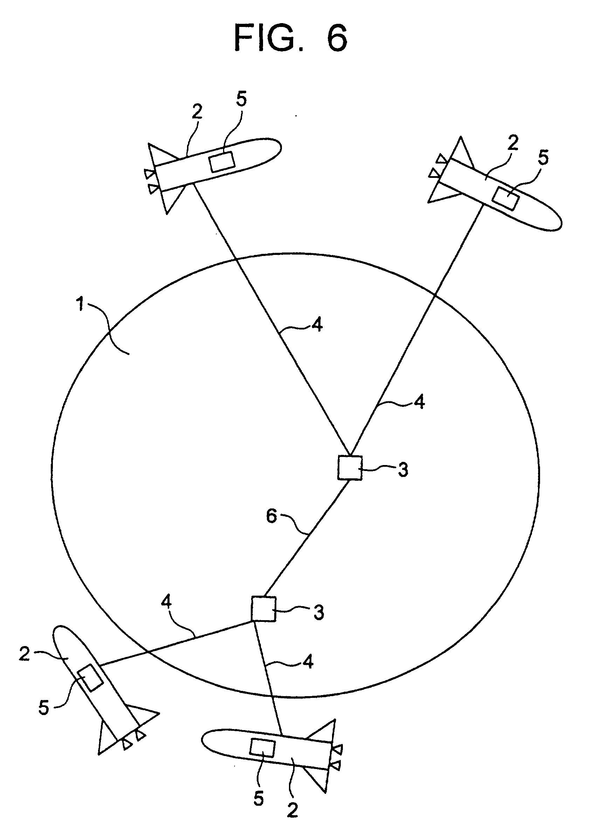

A flying object navigation system according to Embodiment 2 of this invention will be described with reference to Fig. 6. Fig. 6 is a configurational diagram showing the flying object navigation system according to Embodiment 2 of this invention. In Fig. 6, reference numeral 6 denotes a base station interconnection communication line. Other components are the same as those of the above-described Embodiment 1 and are, therefore, indicated by the same reference numerals, and the description for them will not be repeated.

Referring to Fig. 6, the flying object 2 has the meteorological observation apparatus 5 mounted thereon. The meteorological observation apparatus 5 may be placed inside the flying object 2 or externally mounted on the flying object 2. The meteorological observation apparatus 5 has a function for making observations on a star 1 with respect to one or at least two of the significations of the words included in the signification of "meteorology".

In Fig. 6, two base stations 3 are illustrated. However, any number of base stations 3 not smaller than two may be provided. If the number of base stations 3 is larger, the extent of space through which navigation of the flying object 2 can be controlled is increased.

The base stations 3 are connected to each other by the base station interconnection communication line 6. Each of the base stations 3 is connected to one or more flying objects 2 by the communication line 4.

Referring to Fig. 6, the flying object 2 has a function of transmitting observation data obtained by observation with the meteorological observation apparatus 5 to the base station 3 over the communication line 4.

The communication line 4 may be a wired channel using electric waves, sound waves or light waves as communication means, or a wireless channel using such communication means. If wireless communication is performed, antennas, not shown in the figure, may be provided on the flying objects 2 and the base stations 3.

The base station interconnection communication line 6 may be a wired channel using electric waves, sound waves or light waves as communication means, or a wireless channel using such communication means. If wireless communication is performed, antennas, not shown in the figure, may be provided on the flying objects 2 and the base stations 3.

In the base stations 3, data sets (see Fig. 2) constituted of all observation data obtained in the past by observation with the meteorological observation apparatuses 5 mounted on the flying objects 2, records of courses of action taken by the flying objects 2 on the basis of the observation data, and events encountered by the flying objects 2 as the results of the action records are stored on a memory, although this storage is not illustrated.

Also, the base stations 3 have a data base (see Fig. 3) which is formed on the basis of the contents of the above-described data sets stored on the memory, and in which observation data obtained by observation with the meteorological observation apparatuses 5, courses of action taken by the flying objects 2 after meteorological observations, and events encountered by the flying objects 2 are related to each other.

Also, the base stations 3 have functions of receiving over the communication line 4 observation data obtained by observation with the meteorological observation apparatuses 5, making a search to ascertain which case in the above-described data base the received observation data corresponds to, and predicting the relationship between a course of action taken by the flying object 2 and an event encountered by the flying object 2 as a result of taking the course of action.

Also, the base stations 3 have a function of transmitting prediction results to the flying objects 2 over the communication line 4. On the other hand, the flying objects 2 have a function of receiving the prediction results over the communication line 4.

Also, the base stations 3 have functions of successively storing, on the memory, data sets constituted of observation data obtained by observation with the meteorological observation apparatus 5, a record of a course of action taken by the flying object 2 on the basis of the observation data, and an event actually encountered by the flying object 2 as the result of the action record, and reconstructing the above-described data base from updated data sets obtained by combining the older data sets and the new data sets successively stored.

Referring to Fig. 6, the base stations 3 are located on the surface of the star 1. The base stations 3, however, may be in a state of floating in the air or flying instead of being located on the surface of the star 1. Further, the base stations 3 may be mounted on the flying objects 2.

Every time each of the base stations 3 reconstructs the data base, it communicates the data sets and the data base to the other base stations 3 over the base station interconnection communication line 6.

Referring to Fig. 6, it is not necessary that any two of the plurality of base stations 3 be directly connected by the base station interconnection communication line 6, and some two of the base stations 3 may be connected via one of the other base stations 3.

Referring to Fig. 6, the number of flying objects 2 connected to the base station 3 is two. However, any number of flying objects 2 except zero may be connected. If the number of flying objects 2 connected to one base station 3 is larger, the extent of space through which navigation can be controlled by one base station 3 is increased.

The operation of the flying object navigation system shown in Fig. 6 will next be described.

First, the objective meteorology is observed with the meteorological observation apparatus 5 mounted on each flying object 2, and observation data is transmitted to the base station 3 over the communication line 4.

Next, the base station 3 receives over the communication line 4 the observation data obtained by observation with the meteorological observation apparatus 5, makes a search to ascertain which case in the above-described data base the received observation data corresponds to, and predicts the relationship between a course of action thereafter taken by the flying object 2 and an event encountered by the flying object 2 as a result of taking the course of action.

In prediction of one event encountered by each flying object 2, the meteorology observed with the meteorological observation apparatus 5 and used for prediction is not limited to one condition, e.g., the wind velocity and may comprise two or more conditions.

Next, the base station 3 transmits the results of prediction of events which may be encountered by each flying object 2 to the flying object 2 over the communication line 4. Then each flying object 2 can be navigated to perform stable speedy flying on the basis of the results of prediction of the relationship between each course of action taken by the flying object 2 and the event encountered by the flying object 2 as a result of taking the course of action.

Records of courses of action taken by the flying object 2 and events thereafter encountered actually by the flying object 2 are successively transmitted to the base station 3 over the communication line 4.

Then the base station 3 successively stores, on the memory, data sets constituted of observation data obtained by observation with the meteorological observation apparatus 5, a record of a course of action taken by the flying object 2 on the basis of the observation data, and an event actually encountered by the flying object 2 as the result of the action record, and reconstructs the data base from data sets obtained by combining the older data sets and the new data sets successively stored. In this manner, the accuracy of the results of prediction of events which may be encountered by the flying object 2 from observation data can be improved.

Next, every time the base station 3 reconstructs the data base, it communicates the data sets and the data base to all the other base stations 3 over the base station interconnection communication line 6, thereby enabling all the base stations 3 to use common data corresponding to the data sets and the data base.

In the above-described system, a pilot who operates the flying object 2 is needed to enable the flying object 2 to take a course of action. According to the present invention, a control signal may be transmitted from the base station 3 to the flying object 2 over the communication line 4 to operate the flying object 2, thereby preventing occurrence of human error in control by a pilot.

The above-described flying object navigation system according to Embodiment 2 of the present invention navigates one flying object 2 or two or more flying objects 2 on the basis of the data base held as common data for the flying objects 2, and is therefore capable of accurate prediction of events encountered by the flying objects 2. Also, a plurality of base stations 3 are provided to extend the controllable range of navigation of flying objects 2.

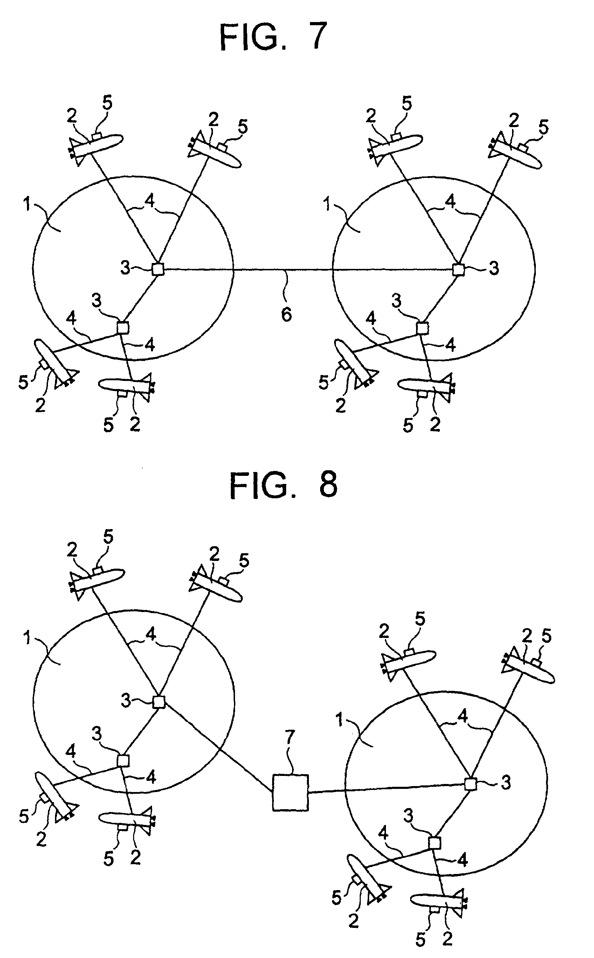

The above-described flying object navigation system according to Embodiment 2 of the present invention may be provided on a plurality of different stars 1. Figs. 7 and 8 show a case where the flying object navigation system according to Embodiment 2 of the present invention is provided on a plurality of different stars 1.

Referring to Fig. 7, the base stations 3 on the stars 1 may be connected to each other by a wireless or wired base station interconnection communication line 6 to enable common use of the data sets and the data base, thereby further extending the controllable range of navigation of flying objects 2.

As shown in Fig. 8, such a system may also have a central base station 7 in a space surrounding one star 1, on the surface of one star 1 or in outer space. The central base station 7 and each of the base stations 3 existing on the plurality of stars 1 are connected to each other by the wireless or wired base station interconnection communication line 6. Every time the data sets and the data base stored in each of the base stations 3 are updated and reconstructed, they are transmitted to the central base station 7 over the communication line. The central base station 7 transmits the received data sets and data base to all the base stations 3. In this manner, the controllable range of navigation of the flying objects 2 can further be extended.

As described above, the same effect as that in the Embodiment 1 can also be obtained in this embodiment. Further, since a plurality of base stations 3 are provided on one star 1, it is possible to increase the extent of space through which navigation of flying objects can be controlled.

### Embodiment 3

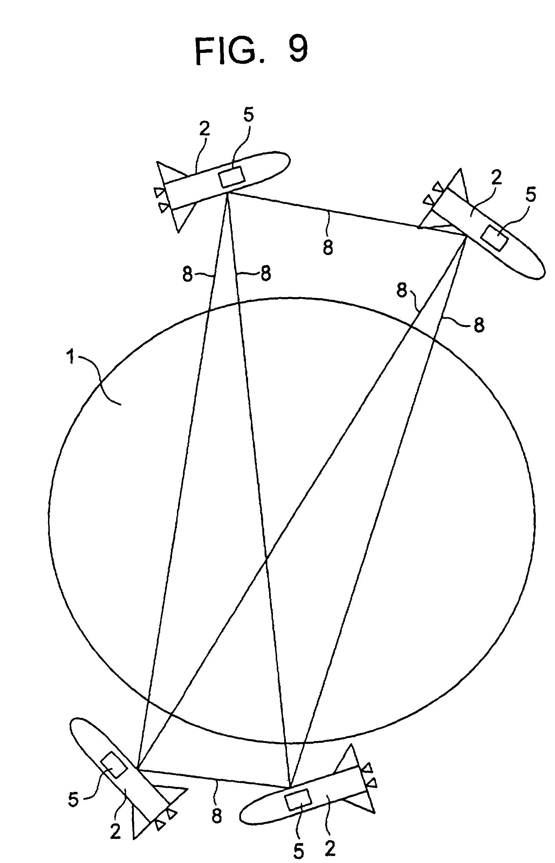

A flying object navigation system according to Embodiment 3 of this invention will be described with reference to Fig. 9. Fig. 9 is a configurational diagram showing the flying object navigation system according to Embodiment 3 of this invention. In Fig. 9, reference numeral 8 denotes a flying object interconnection communication line. Other components are the same as those of the above-described Embodiments 1 and 2 and are, therefore, indicated by the same reference numerals, and the description for them will not be repeated.

Referring to Fig. 9, the flying object 2 has the meteorological observation apparatus 5 mounted thereon. The meteorological observation apparatus 5 may be placed inside the flying object 2 or externally mounted on the flying object 2. The meteorological observation apparatus 5 has a function for making observations on a star 1 with respect to one or at least two of the significations of the words included in the signification of "meteorology".

Referring to Fig. 9, a plurality of the flying objects 2 are connected to each other by the flying object interconnection communication lines 8. The flying objects 2 have functions of mutually transmitting and receiving observation data obtained by observation with the meteorological observation apparatuses 5 over the flying object interconnection communication lines 8.

Referring to Fig. 9, it is not necessary that any two of the plurality of flying objects 2 be directly connected by the flying object interconnection communication lines 8, and some two of the flying objects 2 may be connected via one of the other flying objects 2.

The flying object interconnection communication line 8 may be a wired channel using electric waves, sound waves or light waves as communication means, or a wireless channel using such communication means. If wireless communication is performed, antennas, not shown in the figure, may be provided on the flying objects 2 and the base stations 3.

In each flying object 2, data sets (see Fig. 2) constituted of all observation data obtained in the past by observation with the meteorological observation apparatuses 5 mounted on the plurality of flying objects 2 connected by the flying object interconnection communication lines 8, records of courses of action taken by the flying objects 2 on the basis of the observation data, and events encountered by the flying objects 2 as the results of the action records are stored on a memory, although this storage is not illustrated.

Also, each flying object 2 has a data base (see Fig. 3) which is formed on the basis of the contents of the data sets stored on the memory, and in which observation data obtained by observation with the meteorological observation apparatuses 5, courses of action taken by the flying objects 2 after meteorological observations, and events encountered by the flying objects 2 are related to each other.

That is, each flying object 2 has the data sets and the data base equal in content to those in the other flying objects 2, and the flying objects 2 are navigated on the basis of the common data base described above, so that the accuracy of prediction of events encountered by the flying objects 2 is high.

Also, each flying object 2 has functions of making a search to ascertain which case in the data base observation data obtained by observation with the meteorological observation apparatus 5 mounted on it corresponds to, and predicting the relationship between a course of action taken by the flying object 2 and an event encountered by the flying object 2 as a result of taking the course of action.

Also, each flying object 2 has a function of transmitting results of the above-described prediction to the other flying objects 2 over the flying object interconnection communication line 8.

Also, each flying object 2 has functions of successively storing, on the memory, data sets constituted of observation data obtained by observation with the meteorological observation apparatus 5 mounted on it or the other flying objects 2, a record of a course of action taken by itself or by the other flying objects 2 on the basis of the observation data, and an event actually encountered by itself or the other flying objects 2 as the result of the action record, and reconstructing the data base from updated data sets obtained by combining the older data sets and the new data sets successively stored.

Referring to Fig. 9, there are four flying objects 2. However, any number of flying objects 2 except zero may exist. If the number of flying objects 2 is larger, the extent of space through which navigation can be controlled is increased.

The operation of the flying object navigation system shown in Fig. 9 will next be described.

First, the objective meteorology is observed with the meteorological observation apparatus 5 mounted on each flying object 2, and observation data is transmitted and received between the flying objects over the flying object interconnection communication lines 8.

In prediction of one event encountered by each flying object 2, the meteorology observed with the meteorological observation apparatus 5 and used for prediction is not limited to one condition, e.g., the wind velocity and may comprise two or more conditions.

Next, each flying object 2 receives over the flying object interconnection communication lines 8 the observation data obtained by observation with the meteorological observation apparatuses 5 mounted on the other flying objects 2, makes searches to ascertain which cases in the data base the received observation data and the observation data obtained by observation with its own meteorological observation apparatus 5 correspond to, and predicts the relationship between a course of action thereafter taken by the flying object 2 and an event encountered by the flying object 2 as a result of taking the course of action.

Then each flying object 2 can take a course of action for stable speedy flying on the basis of the results of prediction of the relationship between each course of action taken by the flying object 2 and the event encountered by the flying object 2 as a result of taking the course of action.

Records of courses of action taken by the flying object 2 and events thereafter encountered actually by the flying object 2 are successively transmitted to the other flying objects 2 over the flying object interconnection communication lines 8.

Then each flying object 2 successively stores, on the memory, data sets constituted of observation data obtained by observation with the meteorological observation apparatuses 5, a record of a course of action taken by each flying object 2 on the basis of the observation data, and an event actually encountered by the flying object 2 as the result of the action record, and reconstructs the data base from data sets obtained by combining the older data sets and the new data sets successively stored. In this manner, the accuracy of the results of prediction of events which may be encountered by the flying object 2 from observation data can be improved.

In the above-described system, a pilot who operates the flying object 2 is needed to enable the flying object 2 to take a course of action. According to the present invention, the flying object 2 may have a function of automatically taking a course of action for stable speedy flying on the basis of the results of prediction of the relationship between each course of action taken by the flying object 2 and the event encountered by the flying object 2 as a result of taking the course of action, thereby preventing occurrence of human error in control by a pilot.

The above-described flying object navigation system according to Embodiment 3 of the present invention navigates one flying object 2 or two or more flying objects 2 on the basis of the data base held as common data for the flying objects 2, and is therefore capable of accurate prediction of events encountered by the flying objects 2. Further, since the data base is provided in each flying object, the process from obtaining observation data in each flying object 2 to determining a course of action to be taken can be performed in each flying object 2. Consequently, the time required to decide a course of action to be taken can be reduced to achieve stabler and speedier navigation.

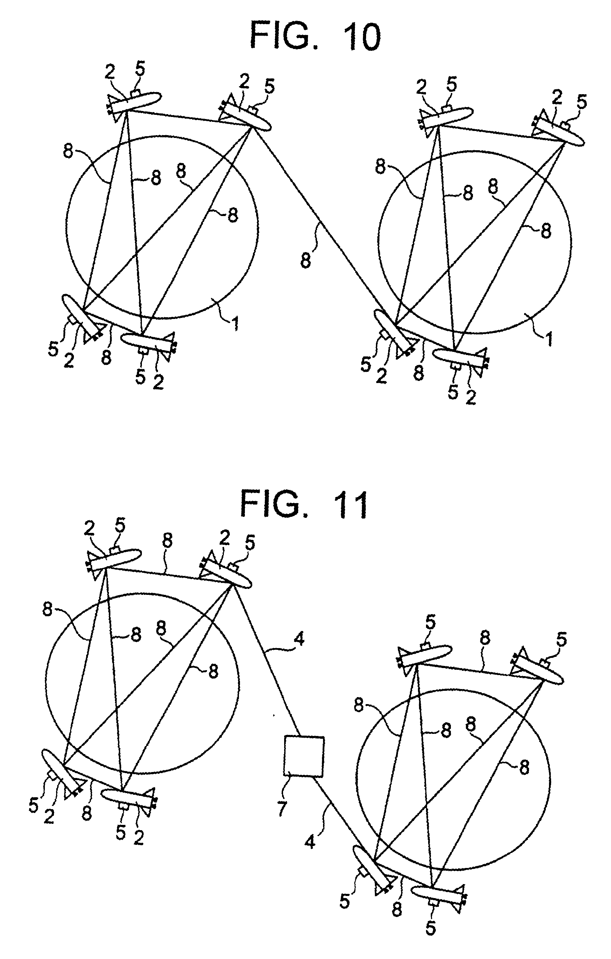

The above-described flying object navigation system according to Embodiment 3 of the present invention may be provided on a plurality of different stars 1. Figs. 10 and 11 show a case where the flying object navigation system according to Embodiment 3 of the present invention is provided on a plurality of different stars 1.

Referring to Fig. 10, the flying objects 2 on the stars 1 may be connected to each other by the wireless or wired flying object interconnection communication lines 8 to enable common use of the data sets and the data base, thereby further extending the controllable range of navigation of flying objects 2.

As shown in Fig. 11, such a system may also have a central base station 7 in a space surrounding one star 1, on the surface of one star 1 or in outer space. The central base station 7 and each of the flying objects 2 existing at the plurality of stars 1 are connected to each other by the wireless or wired flying object interconnection communication lines 8. Every time the data sets and the data base stored in each base station 3 are updated and reconstructed, they are transmitted to the central base station 7 over the communication line. The central base station 7 transmits the received data sets and data base to all the flying objects 2. In this manner, the controllable range of navigation of flying objects 2 can be further extended.

As described above, in this embodiment, the plurality of flying objects 2 are navigated on the basis of the data base held as common data for the flying objects 2, as in the above-described Embodiments 1 and 2, so that the accuracy of prediction of events encountered by the flying objects 2 is high. Further, since the data base is provided in each flying object, the process from obtaining observation data in each flying object 2 to determining a course of action to be taken can be performed in each flying object 2. Consequently, the time required to decide a course of action to be taken can be reduced to achieve stabler and speedier navigation.

### Embodiment 4

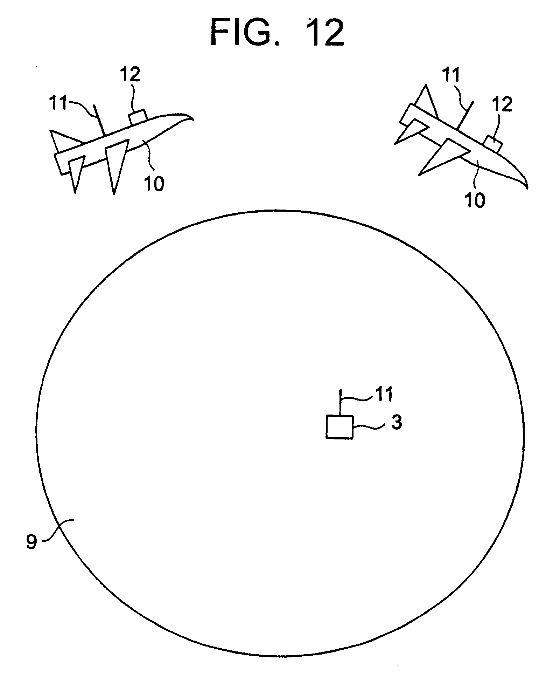

A flying object navigation system according to Embodiment 4 of this invention will be described with reference to Fig. 12. Fig. 12 is a configurational diagram showing the flying object navigation system according to Embodiment 4 of this invention. In Fig. 12, reference numeral 9 denotes the earth, reference numeral 10 an airplane, and reference numeral 3 a base station. Also, reference numeral 11 is an antenna and reference numeral 12 is an air turbulence detector.

The signification of the words "airplane" used in this specification of the present invention comprises those of words designating everything flying in a space surrounding the earth, e.g., passenger airplanes, fighter planes, helicopters, balloons, and airships.

Referring to Fig. 12, each of the airplanes 10 and the base station 3 has an antenna 11 mounted thereon, respectively. The antenna 11 may be placed inside the airplane 10 or the base station 3 or externally mounted on the airplane 10 or the base station 3.

Referring to Fig. 12, the airplane 10 has the air turbulence detector 12. The air turbulence detector 12 may be placed inside the airplane 10 or externally mounted on the airplane 10. The air turbulence detector 12 has a function of measuring "data for detecting air turbulence" described below in a space surrounding the earth 9.

"Data for detecting air turbulence" used in Embodiments 4 to 9 of the present invention means data used for observing with the air turbulence detector 12 and predicting events encountered by each of the airplanes 10.

Further, "Data for detecting air turbulence" used in Embodiments 4 to 9 of the present invention is not limited to one kind of data, e.g., wind velocity data, and a plurality of observation results may be used as data for detecting air turbulence.

Use of the air turbulence detector 12 is effective in detecting the existence of air turbulence which is particularly obstructive to the travel of airplanes.

Referring to Fig. 12, the airplane 10 and the base station 3 perform mutual wireless communication through the antennas 11. The airplane 10 has a function of transmitting data for detecting air turbulence obtained by observation with the air turbulence detector 12 to the base station 3 through the antenna 11.

Wireless communication between the airplane 10 and the base station 3 using the antennas 11 is effective in increasing the degree of freedom of flying of the airplane 10 in comparison with the case of using a wired communication line.

To perform the wireless communication, electric waves, sound waves, or light waves of, for example, laser light are used as communication means. In particular, use of light waves as communication means enables high-speed and large-capacity communication and is effective in increasing the speed of communication between the airplane 10 and the base station 3.

In the base station 3, data sets (see Fig. 2) constituted of all data for detecting air turbulence obtained in the past by observation with the air turbulence detectors 12 mounted on the airplanes 10, records of courses of action taken by the airplanes 10 on the basis of the data for detecting air turbulence, and events encountered by the airplanes 10 as the results of the action records are stored on a memory, although this storage is not illustrated.

The words "an event encountered by airplane 10" used in Embodiments 4 to 9 of the present invention signify a situation where the airplane 10 plunges or does not plunge into turbulent air, or the scale of turbulence when the airplane 10 plunges into turbulent air and, more specifically, changes in wind velocity with time in the vertical and horizontal directions influencing the airplane 10.

Also, the base station 3 has a data base (see Fig. 3) which is formed on the basis of the contents of the data sets stored on the memory, and in which data for detecting air turbulence obtained by observation with the air turbulence detectors 12, courses of action taken by the airplanes 10 after observations of data for detecting air turbulence, and events encountered by the airplanes 10 as the results of taking the courses of action are related to each other.

Also, the base station 3 has functions of receiving through the antenna 11 data for detecting air turbulence obtained by observation with the air turbulence detectors 12, making a search to ascertain which case in the data base the received data for detecting air turbulence corresponds to, and predicting the relationship between a course of action taken by the airplane 10 and an event encountered by the airplane 10 as a result of taking the course of action.

Also, the base station 3 has a function of transmitting prediction results to the airplanes 10 through the antenna 11. On the other hand, the airplanes 10 have a function of receiving the prediction results through the antenna 11.

Also, the base station 3 has functions of successively storing, on the memory, data sets constituted of data for detecting air turbulence obtained by observation with the air turbulence detector 12, a record of a course of action taken by the airplane 10 on the basis of the data for detecting air turbulence, and an event actually encountered by the airplane 10 as the result of the action record, and reconstructing the data base from data sets obtained by combining the older data sets and the new data sets successively stored.

Referring to Fig. 12, the base station 3 is located on the surface of the earth 9. The base station 3, however, may be in a state of floating in the air or flying instead of being located on the surface of the earth 9. Further, the base station 3 may be mounted on the airplane 10.

Referring to Fig. 12, the number of airplanes 10 connected to the base station 3 is two. However, any number of airplanes 10 except zero may be connected. If the number of airplanes 10 connected to one base station 3 is larger, the extent of space through which navigation can be controlled by one base station 3 is increased.

The operation of the flying object navigation system shown in Fig. 12 will next be described.

First, the objective meteorology is observed with the air turbulence detector 12 mounted on each airplane 10, that is, data for detecting air turbulence is obtained by observation, and the data for detecting air turbulence is transmitted to the base station 3 through the antenna 11.

Next, the base station 3 receives through the antenna 11 the data for detecting air turbulence obtained by observation with the air turbulence detector 12, makes a search to ascertain which case in the data base the received data for detecting air turbulence corresponds to, and predicts the relationship between a course of action thereafter taken by the airplane 10 and an event encountered by the airplane 10 as a result of taking the course of action.

Next, the base station 3 transmits the results of prediction of events which may be encountered by each airplane 10 to the airplane 10 through the antenna 11. Then each airplane 10 can be navigated to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the base station 3 through the antenna 11.

Then the base station 3 successively stores, on the memory, data sets constituted of data for detecting air turbulence obtained by observation with the air turbulence detector 12, a record of a course of action taken by the airplane 10 on the basis of the data for detecting air turbulence, and an event actually encountered by the airplane 10 as the result of the action record, and reconstructs the data base from updated data sets obtained by combining the older data sets and the new data sets successively stored. In this manner, the accuracy of the results of prediction of events which may be encountered by the airplane 10 from data for detecting air turbulence can be improved.

In the above-described system, a pilot who operates the airplane 10 is needed to enable the airplane 10 to take a course of action. According to the present invention, a control signal may be transmitted from the base station 3 to the airplane 10 through the antenna 11 to operate the airplane 10, thereby preventing occurrence of human error in control by a pilot.

The above-described flying object navigation system according to Embodiment 4 of the present invention navigates one airplane 10 or two or more airplanes 10 on the basis of the data base held as common data for the airplanes 10, and is therefore capable of accurate prediction of events encountered by the airplanes 10.

Also, the above-described flying object navigation system according to Embodiment 4 of the present invention uses the air turbulence detector 12 to enable detection of the existence of turbulent air which is particularly obstructive to the travel of airplanes, and the airplane 10 can take a course of action to avoid such turbulent air to be navigated more stably and speedily.

### Embodiment 5

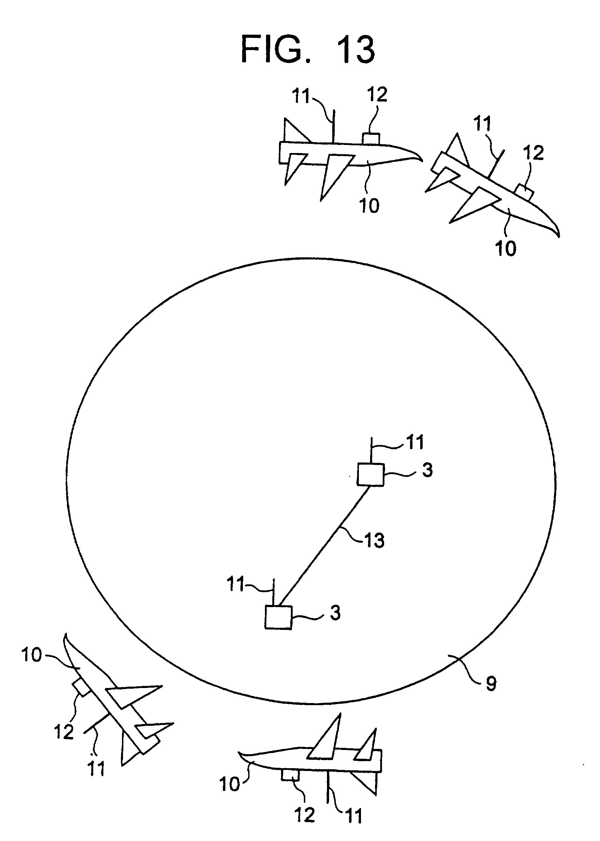

A flying object navigation system according to Embodiment 5 of this invention will be described with reference to Fig. 13. Fig. 13 is a configurational diagram showing the flying object navigation system according to Embodiment 5 of this invention. In Fig. 13, reference numeral 13 represents a base station interconnection cable. Other components are the same as those of the above-described Embodiment 4 and are, therefore, indicated by the same reference numerals, and the description for them will not be repeated.

Referring to Fig. 13, each of the airplanes 10 and each of the base stations 3 has an antenna 11 mounted thereon, respectively. The antenna 11 may be placed inside the airplane 10 or the base station 3 or externally mounted on the airplane 10 or the base station 3.

Referring to Fig. 13, the airplane 10 has the air turbulence detector 12. The air turbulence detector 12 may be placed inside the airplane 10 or externally mounted on the airplane 10. The air turbulence detector 12 has a function of measuring data for detecting air turbulence in a space surrounding the earth 9.

In Fig. 13, two base stations 3 are illustrated. However, any number of base stations 3 not smaller than two may be provided. If the number of base stations 3 is lager, the extent of space through which navigation of the airplanes 10 can be controlled is increased.

The base stations 3 are connected to each other by the base station interconnection cable 13. Each base station 3 performs mutual communication with one or more airplanes 10 through the antenna 11.

Use of the base station interconnection cable 13 enables communication with higher efficiency in comparison with wireless communication between the base stations particularly in a case where the two base stations 3 are located at points on the earth 9 opposite from each other about a center of the earth 9.

Referring to Fig. 13, the airplane 10 has a function of transmitting data for detecting air turbulence obtained by observation with the air turbulence detector 12 to the base station 3 through the antenna 11.

To perform the wireless communication between the airplane 10 and the base station 3, electric waves, sound waves, or light waves of, for example, laser light are used as communication means. In particular, use of light waves as communication means enables high-speed and large-capacity communication and is effective in increasing the speed of communication between the airplane 10 and the base station 3.

The base station interconnection capable 13 is a wired line, e.g., an electric cable such as a telephone line, a conduit such as a water service pipe, or an optical fiber cable. In particular, use of an optical fiber cable as communication means enables high-speed and large-capacity communication and is effective in increasing the speed of communication between the base stations 3.

In the base station 3, data sets (see Fig. 2) constituted of all data for detecting air turbulence obtained in the past by observation with the air turbulence detectors 12 mounted on the airplanes 10, records of courses of action taken by the airplanes 10 on the basis of the data for detecting air turbulence, and events encountered by the airplanes 10 as the results of the action records are stored on a memory, although this storage is not illustrated.

Also, the base station 3 has a data base (see Fig. 3) which is formed on the basis of the contents of the data sets stored on the memory, and in which data for detecting air turbulence obtained by observation with the air turbulence detectors 12, courses of action taken by the airplanes 10 after meteorological observations, and events encountered by the airplanes 10 as the results of taking the courses of action are related to each other.

Also, the base station 3 has functions of receiving through the antenna 11 data for detecting air turbulence obtained by observation with the air turbulence detectors 12, making a search to ascertain which case in the data base the received data for detecting air turbulence corresponds to, and predicting the relationship between a course of action taken by the airplane 10 and an event encountered by the airplane 10 as a result of taking the course of action.

Also, the base station 3 has a function of transmitting prediction results to the airplanes 10 through the antenna 11. On the other hand, the airplanes 10 have a function of receiving the prediction results through the antenna 11.

Also, the base station 3 has functions of successively storing, on the memory, data sets constituted of data for detecting air turbulence obtained by observation with the air turbulence detector 12, a record of a course of action taken by the airplane 10 on the basis of the data for detecting air turbulence, and an event actually encountered by the airplane 10 as the result of the action record, and reconstructing the data base from updated data sets obtained by combining the older data sets and the new data sets successively stored.

Referring to Fig. 13, the base station 3 is located on the surface of the earth 9. The base station 3, however, may be in a state of floating in the air or flying instead of being located on the surface of the earth 9. Further, the base station 3 may be mounted on the airplane 10.

Every time each base station 3 reconstructs the data base, it communicates the data sets and the data base to the other base stations 3 through the base station interconnection cable 13.

Referring to Fig. 13, it is not necessary that any two of the plurality of base stations 3 be directly connected by the base station interconnection cable 13, and some two of the base stations 3 may be connected via one of the other base stations 3.

Referring to Fig. 13, the number of airplanes 10 connected to the base station 3 is two. However, any number of airplanes 10 except zero may be connected. If the number of airplanes 10 connected to one base station 3 is larger, the extent of space through which navigation can be controlled by one base station 3 is increased.

The operation of the flying object navigation system shown in Fig. 13 will next be described.

First, the objective meteorology is observed with the air turbulence detector 12 mounted on each airplane 10, and data for detecting air turbulence is transmitted to the base station 3 through the antenna 11.

Next, the base station 3 receives through the antenna 11 the data for detecting air turbulence obtained by observation with the air turbulence detector 12, makes a search to ascertain which case in the data base the received data for detecting air turbulence corresponds to, and predicts the relationship between a course of action thereafter taken by the airplane 10 and an event encountered by the airplane 10 as a result of taking the course of action.

Next, the base station 3 transmits the results of prediction of events which may be encountered by each airplane 10 to the airplane 10 through the antenna 11. Then each airplane 10 can be navigated to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the nearest base station 3 through the antenna 11.

Then the base station 3 successively stores, on the memory, data sets constituted of data for detecting air turbulence obtained by observation with the air turbulence detector 12, a record of a course of action taken by the airplane 10 on the basis of the data for detecting air turbulence, and an event actually encountered by the airplane 10 as the result of the action record, and reconstructs the data base from data sets obtained by combining the older data sets and the new data sets successively stored. In this manner, the accuracy of the results of prediction of events which may be encountered by the airplane 10 from data for detecting air turbulence can be improved.

Every time each base station 3 reconstructs the data base, it communicates the data sets and the data base to all the other base stations 3 through the base station interconnection cable 13, thereby enabling use of common data corresponding to the data sets and the data base between all the base stations 3.

In the above-described system, a pilot who operates the airplane 10 is needed to enable the airplane 10 to take a course of action. According to the present invention, a control signal may be transmitted from the base station 3 to the airplane 10 through the antenna 11 to operate the airplane 10, thereby preventing occurrence of human error in control by a pilot.

The above-described flying object navigation system according to Embodiment 5 of the present invention navigates one airplane 10 or two or more airplanes 10 on the basis of the data base held as common data for the airplanes 10, and is therefore capable of accurate prediction of events encountered by the airplanes 10. Also, a plurality of base stations 3 are provided to extend the controllable range of navigation of the airplanes 10.

Since the base stations 3 are connected not by wireless communication but by the base station interconnection cable 13, it is possible to perform communication with higher efficiency in comparison with wireless communication between the base stations particularly in a case where the plurality of base stations 3 are located at points on the earth 9 opposite from each other about a center of the earth 9.

Also, the above-described flying object navigation system according to Embodiment 5 of the present invention uses the air turbulence detector 12 to enable detection of the existence of turbulent air which is particularly obstructive to the travel of airplanes, and the airplane 10 can take a course of action to avoid such turbulent air to be navigated more stably and speedily.

### Embodiment 6

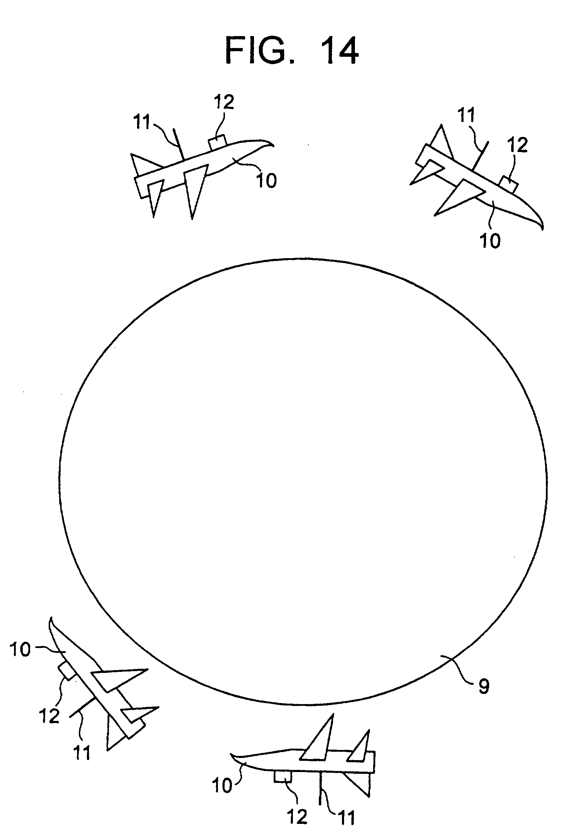

A flying object navigation system according to Embodiment 6 of this invention will be described with reference to Fig. 14. Fig. 14 is a configurational diagram showing the flying object navigation system according to Embodiment 6 of this invention.

Referring to Fig. 14, the airplane 10 has the antenna 11 and the air turbulence detector 12. The antenna 11 may be placed inside the airplane 10 or externally mounted on the airplane 10. The air turbulence detector 12 may be placed inside the airplane 10 or externally mounted on the airplane 10. The air turbulence detector 12 has a function of measuring data for detecting air turbulence in a space surrounding the earth 9.

Referring to Fig. 14, a plurality of airplanes 10 perform mutual wireless communication through the antennas 11. The airplanes 10 have functions of mutually transmitting and receiving data for detecting air turbulence obtained by observation with the air turbulence detectors 12 through the antennas 11.

Wireless communication between the airplanes 10 using the antennas 11 is effective in increasing the degree of freedom of action of the airplanes 10 in comparison with the case of using a wired communication line.

To perform the wireless communication between the airplanes 10, electric waves, sound waves, or light waves of, for example, laser light are used as communication means. In particular, use of light waves as communication means enables high-speed and large-capacity communication and is effective in increasing the speed of communication between the airplanes 10.

Referring to Fig. 14, it is not necessary that any two of the plurality of airplanes be directly connected through the antennas 11, and some two of the airplanes 10 may be connected via one of the other airplanes 10.

In each airplane 10, data sets (see Fig. 2) constituted of all data for detecting air turbulence obtained in the past by observation with the air turbulence detectors 12 mounted on the airplanes 10 connected through the antennas 11, records of courses of action taken by the airplanes 10 on the basis of the data for detecting air turbulence, and events encountered by the airplanes 10 as the results of the action records are stored on a memory, although this storage is not illustrated.

Also, each airplane 10 has a data base (see Fig. 3) which is formed on the basis of the contents of the data sets stored on the memory, and in which data for detecting air turbulence obtained by observation with the air turbulence detectors 12, courses of action taken by the airplanes 10 after meteorological observations, and events encountered by the airplanes 10 as the results of taking the courses of action are related to each other.

Also, each airplane 10 has functions of making a search to ascertain which case in the data base data for detecting air turbulence obtained by observation with the air turbulence detector 12 mounted on it corresponds to, and predicting the relationship between a course of action taken by the airplane 10 and an event encountered by the airplane 10 as a result of taking the course of action.

Also, each airplane 10 has a function of transmitting the results of prediction to the other airplanes 10 through the antenna 11.

Also, each airplane 10 has functions of successively storing, on the memory, data sets constituted of data for detecting air turbulence obtained by observation with the air turbulence detector 12 mounted on it'or the other airplanes 10, a record of a course of action taken by itself or by the other airplanes 10 on the basis of the data for detecting air turbulence, and an event actually encountered by itself or the other airplanes 10 as the result of the action record, and reconstructing the data base from updated data sets obtained by combining the older data sets and the new data sets successively stored.

Referring to Fig. 14, there are four airplanes 10. However, any number of airplanes 10 except zero may exist. If the number of airplanes 10 is larger, the extent of space through which navigation can be controlled is increased.

The operation of the flying object navigation system shown in Fig. 14 will next be described.

First, the objective meteorology is observed with the air turbulence detector 12 mounted on each airplane 10, and data for detecting air turbulence is transmitted and received between the airplanes 10 through the antennas 11.

Next, each airplane 10 receives through the antenna 11 the data for detecting air turbulence obtained by observation with the air turbulence detector 12, makes a search to ascertain which case in the data base the received data for detecting air turbulence corresponds to, and predicts the relationship between a course of action thereafter taken by the airplane 10 and an event encountered by the airplane 10 as a result of taking the course of action.

Then each airplane 10 can take a course of action to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the other airplanes 10 through the antenna 11.

Then each airplane 10 successively stores, on the memory, data sets constituted of data for detecting air turbulence obtained by observation with the air turbulence detector 12, a record of a course of action taken by each airplane 10 on the basis of the data for detecting air turbulence, and an event actually encountered by the airplane 10 as the result of the action record, and reconstructs the data base from data sets obtained by combining the older data sets and the new data sets successively stored. In this manner, the accuracy of the results of prediction of events which may be encountered by the airplane 10 from data for detecting air turbulence can be improved.

In the above-described system, a pilot who operates the airplane 10 is needed to enable the airplane 10 to take a course of action. According to the present invention, the airplane 10 may have a function of automatically taking a course of action for stable speedy flying on the basis of the results of prediction of the relationship between each course of action taken by the airplane 10 and the event encountered by the airplane 10 as a result of taking the course of action, thereby preventing occurrence of human error in control by a pilot.

The above-described flying object navigation system according to Embodiment 6 of the present invention navigates one airplane 10 or two or more airplanes 10 on the basis of the data base held as common data for the airplanes 10, and is therefore capable of accurate prediction of events encountered by the airplanes 10.

Further, since the data base is provided in each airplane, the process from obtaining data for detecting air turbulence in each airplane 10 to determining a course of action to be taken can be performed in each airplane 10. Consequently, the time required to decide a course of action to be taken can be reduced to achieve stabler and speedier navigation.

Also, the above-described flying object navigation system according to Embodiment 6 of the present invention uses the air turbulence detector 12 to enable detection of the existence of turbulent air which is particularly obstructive to the travel of airplanes, and the airplane 10 can take a course of action to avoid such turbulent air to be navigated more stably and speedily.

### Embodiment 7

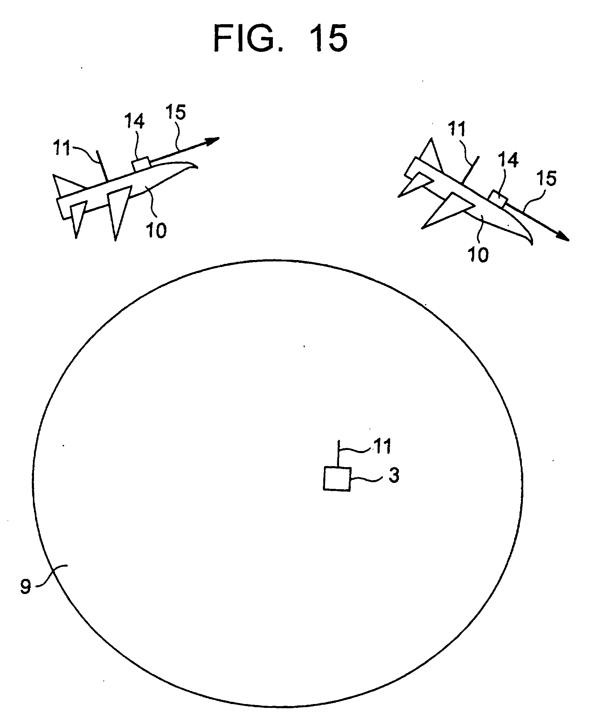

A flying object navigation system according to Embodiment 7 of this invention will be described with reference to Fig. 15. Fig. 15 is a configurational diagram showing the flying object navigation system according to Embodiment 7 of this invention. In Fig. 15, a laser radar air turbulence detector 14 and laser light 15 are illustrated. Other components are the same as those of the above-described Embodiment 4 and are, therefore, indicated by the same reference numerals, and the description for them will not be repeated.

The words "laser radar air turbulence detector" referred to with respect to the present invention denote "an apparatus which has at least one of a function comprising transmitting laser light, receiving, as a received signal, scattered light caused by scattering of the laser light in the air, and observing the wind velocity from the received signal produced under the Doppler effect, and a function comprising receiving as a received signal scattered light caused by scattering of the laser light in the air and observing the density of air from the intensity of the received signal".

The laser radar air turbulence detector transmits and receives laser light of a smaller beam width in comparison with air turbulence detectors or the like using electric waves, and is therefore capable of observing the distribution of wind velocity and density at a higher resolution.

Referring to Fig. 15, each of the airplanes 10 and the base station 3 have the antenna 11 mounted thereon, respectively. The antenna 11 may be placed inside the airplane 10 or the base station 3 or externally mounted on the airplane 10 or the base station 3.

Referring to Fig. 15, the airplane 10 has the laser radar air turbulence detector 14. The laser radar air turbulence detector 14 may be placed inside the airplane 10 or externally mounted on the airplane 10. The laser radar air turbulence detector 14 has a function of measuring data for detecting air turbulence in a space surrounding the earth 9.

Referring to Fig. 15, the airplane 10 and the base station 3 perform mutual wireless communication through the antennas 11. The airplane 10 has a function of transmitting data for detecting air turbulence obtained by observation with the laser radar air turbulence detector 14 to the base station 3 through the antenna 11.

To perform the wireless communication, electric waves, sound waves, or light waves of, for example, laser light are used as communication means. In particular, use of light waves as communication means enables high-speed and large-capacity communication and is effective in increasing the speed of communication between the airplane 10 and the base station 3.

In the base station 3, data sets (see Fig. 2) constituted of all data for detecting air turbulence obtained in the past by observation with the laser radar air turbulence detectors 14 mounted on the airplanes 10, records of courses of action taken by the airplanes 10 on the basis of the data for detecting air turbulence, and events encountered by the airplanes 10 as the results of the action records are stored on a memory, although this storage is not illustrated.

Also, the base station 3 has a data base (see Fig. 3) which is formed on the basis of the contents of the data sets stored on the memory, and in which data for detecting air turbulence obtained by observation with the laser radar air turbulence detectors 14, courses of action taken by the airplanes 10 after observations of data for detecting air turbulence, and events encountered by the airplanes 10 as the results of taking the courses of action are related to each other.

Also, the base station 3 has functions of receiving through the antenna 11 data for detecting air turbulence obtained by observation with laser radar air turbulence detectors 14, making a search to ascertain which case in the data base the received data for detecting air turbulence corresponds to, and predicting the relationship between a course of action taken by the airplane 10 and an event encountered by the airplane 10 as a result of taking the course of action.

Also, the base station 3 has a function of transmitting prediction results to the airplanes 10 through the antenna 11. On the other hand, the airplanes 10 have a function of receiving the prediction results through the antenna 11.

Also, the base station 3 has functions of successively storing, on the memory, data sets constituted of data for detecting air turbulence obtained by observation with the laser radar air turbulence detector 14, a record of a course of action taken by the airplane 10 on the basis of the data for detecting air turbulence, and an event actually encountered by the airplane 10 as the result of the action record, and reconstructing the data base from data sets obtained by combining the older data sets and the new data sets successively stored.

Referring to Fig. 15, the base station 3 is located on the surface of the earth 9. The base station 3, however, may be in a state of floating in the air or flying instead of being located on the surface of the earth 9. Further, the base station 3 may be mounted on the airplane 10.

Referring to Fig. 15, the number of airplanes 10 connected to the base station 3 is two. However, any number of airplanes 10 except zero may be connected. If the number of airplanes 10 connected to one base station 3 is larger, the extent of space through which navigation can be controlled by one base station 3 is increased.

The operation of the flying object navigation system shown in Fig. 15 will next be described.

First, the objective meteorology is observed with the laser radar air turbulence detector 14 mounted on each airplane 10, that is, data for detecting air turbulence is obtained by observation, and the data for detecting air turbulence is transmitted to the base station 3 through the antenna 11.

Next, the base station 3 receives through the antenna 11 the data for detecting air turbulence obtained by observation with the laser radar air turbulence detector 14, makes a search to ascertain which case in the data base the received data for detecting air turbulence corresponds to, and predicts the relationship between a course of action thereafter taken by the airplane 10 and an event encountered by the airplane 10 as a result of taking the course of action.

Next, the base station 3 transmits the results of prediction of events which may be encountered by each airplane 10 to the airplane 10 through the antenna 11. Then each airplane 10 can be navigated to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the base station 3 through the antenna 11.

Then the base station 3 successively stores, on the memory, data sets constituted of data for detecting air turbulence obtained by observation with the laser radar air turbulence detector 14, a record of a course of action taken by the airplane 10 on the basis of the data for detecting air turbulence, and an event actually encountered by the airplane 10 as the result of the action record, and reconstructs the data base from updated data sets obtained by combining the older data sets and the new data sets successively stored. In this manner, the accuracy of prediction of events which may be encountered by the airplane 10 from data for detecting air turbulence can be improved.

In the above-described system, a pilot who operates the airplane 10 is needed to enable the airplane 10 to take a course of action. According to the present invention, a control signal may be transmitted from the base station 3 to the airplane 10 through the antenna 11 to operate the airplane 10, thereby preventing occurrence of human error in control by a pilot.

The above-described flying object navigation system according to Embodiment 7 of the present invention navigates one airplane 10 or two or more airplanes 10 on the basis of the data base held as common data for the airplanes 10, and is therefore capable of accurate prediction of events encountered by the airplanes 10.

Also, the above-described flying object navigation system according to Embodiment 7 of the present invention uses the laser radar air turbulence detector 14 to enable detection of the existence of turbulent air which is particularly obstructive to the travel of airplanes, and the airplane 10 can take a course of action to avoid such turbulent air to be navigated more stably and speedily.

Also, the above-described flying object navigation system according to Embodiment 7 of the present invention uses the laser radar air turbulence detector that transmits and receives laser light of a smaller beam width in comparison with air turbulence detectors or the like using electric waves, thereby enabling observation of the distribution of wind velocity and density at a higher resolution.

### Embodiment 8

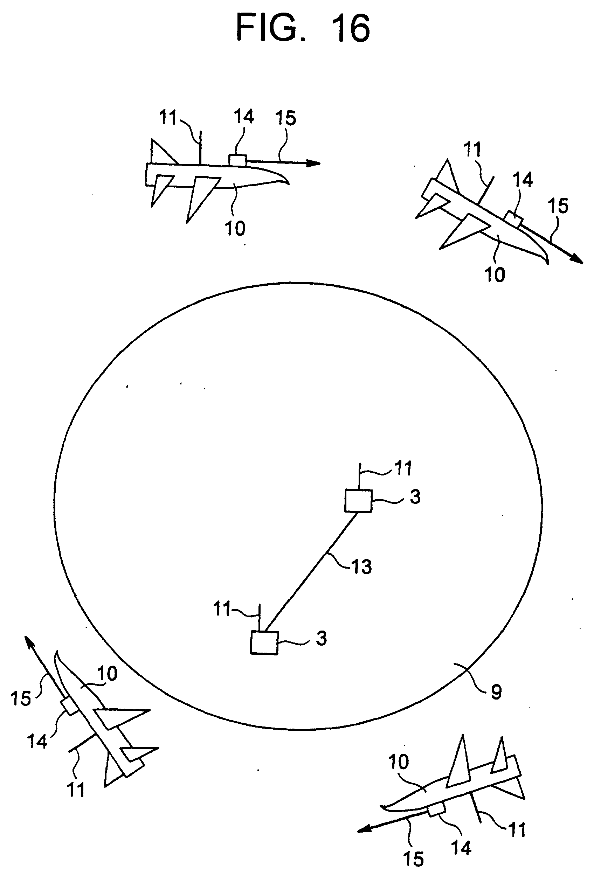

A flying object navigation system according to Embodiment 8 of this invention will be described with reference to Fig. 16. Fig. 16 is a configurational diagram showing the flying object navigation system according to Embodiment 8 of this invention. In Fig. 16, reference numeral 13 denotes a base station interconnection cable connecting the base stations 3. Other components are the same as those of the above-described Embodiment 7 and are, therefore, indicated by the same reference numerals, and the description for them will not be repeated.

Referring to Fig. 16, each of the airplanes 10 and each of the base stations 3 have an antenna 11 mounted thereon, respectively. The antenna 11 may be placed inside the airplane 10 or the base station 3 or externally mounted on the airplane 10 or the base station 3.

Referring to Fig. 16, the airplane 10 has the laser radar air turbulence detector 14. The laser radar air turbulence detector 14 may be placed inside the airplane 10 or externally mounted on the airplane 10. The laser radar air turbulence detector 14 has a function of making observations on the earth 9 with respect to one or at least two of the significations of the words included in the signification of "meteorology".

In Fig. 16, two base stations 3 are illustrated. Any number of base stations 3 not smaller than two may be provided. If the number of base stations 3 is lager, the extent of space through which navigation of the airplanes 10 can be controlled is increased.

The base stations 3 are connected to each other by the base station interconnection cable 13. Each of the base stations 3 performs mutual communication with one or more airplanes 10 through the antenna 11.

Referring to Fig. 16, the airplane 10 has a function of transmitting data for detecting air turbulence obtained by observation with the laser radar air turbulence detector 14 to the base station 3 through the antenna 11.

To perform the wireless communication between the airplane 10 and the base station 3, electric waves, sound waves, or light waves of, for example, laser light are used as communication means. In particular, use of light waves as communication means enables high-speed and large-capacity communication and is effective in increasing the speed of communication between the airplane 10 and the base station 3.

The base station interconnection capable 13 is a wired line, e.g., an electric cable such as a telephone line, a conduit such as a water service pipe, or an optical fiber cable. In particular, use of an optical fiber cable as communication means enables high-speed and large-capacity communication and is effective in increasing the speed of communication between the base stations 3.

In the base station 3, data sets (see Fig. 2) constituted of all data for detecting air turbulence obtained in the past by observation with the laser radar air turbulence detectors 14 mounted on the airplanes 10, records of courses of action taken by the airplanes 10 on the basis of the data for detecting air turbulence, and events encountered by the airplanes 10 as the results of the action records are stored on a memory, although this storage is not illustrated.

Also, the base station 3 has a data base (see Fig. 3) which is formed on the basis of the contents of the data sets stored on the memory, and in which data for detecting air turbulence obtained by observation with the laser radar air turbulence detectors 14, courses of action taken by the airplanes 10 after meteorological observations, and events encountered by the airplanes 10 as the results of taking the courses of action are related to each other.

Also, the base station 3 has functions of receiving through the antenna 11 data for detecting air turbulence obtained by observation with the laser radar air turbulence detector 14, making a search to ascertain which case in the data base the received data for detecting air turbulence corresponds to, and predicting the relationship between a course of action taken by the airplane 10 and an event encountered by the airplane 10 as a result of taking the course of action.

Also, the base station 3 has a function of transmitting prediction results to the airplanes 10 through the antenna 11. On the other hand, the airplanes 10 have a function of receiving the prediction results through the antenna 11.

Also, the base station 3 has functions of successively storing, on the memory, data sets constituted of data for detecting air turbulence obtained by observation with the laser radar air turbulence detector 14, a record of a course of action taken by the airplane 10 on the basis of the data for detecting air turbulence, and an event actually encountered by the airplane 10 as the result of the action record, and reconstructing the data base from updated data sets obtained by combining the older data sets and the new data sets successively stored.

Referring to Fig. 16, the base station 3 is located on the surface of the earth 9. The base station 3, however, may be in a state of floating in the air or flying instead of being located on the surface of the earth 9. Further, the base station 3 may be mounted on the airplane 10.

Every time each base station 3 reconstructs the data base, it communicates the data sets and the data base to the other base stations 3 through the base station interconnection cable 13.

Referring to Fig. 16, it is not necessary that any two of the plurality of base stations 3 be directly connected by the base station interconnection cable 13, and some two of the base stations 3 may be connected via one of the other base stations 3.

Referring to Fig. 16, the number of airplanes 10 connected to the base station 3 is two. However, any number of airplanes 10 except zero may be connected. If the number of airplanes 10 connected to one base station 3 is larger, the extent of space through which navigation can be controlled by one base station 3 is increased.

The operation of the flying object navigation system shown in Fig. 16 will next be described.

First, the objective meteorology is observed with the laser radar air turbulence detector 14 mounted on each airplane 10, and data for detecting air turbulence is transmitted to the base station 3 through the antenna 11.

Next, the base station 3 receives through the antenna 11 the data for detecting air turbulence obtained by observation with the laser radar air turbulence detector 14, makes a search to ascertain which case in the data base the received data for detecting air turbulence corresponds to, and predicts the relationship between a course of action thereafter taken by the airplane 10 and an event encountered by the airplane 10 as a result of taking the course of action.

Next, the base station 3 transmits the results of prediction of events which may be encountered by each airplane 10 to the airplane 10 through the antenna 11. Then each airplane 10 can be navigated to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the base station 3 through the antenna 11.

Then the base station 3 successively stores, on the memory, data sets constituted of data for detecting air turbulence obtained by observation with the laser radar air turbulence detector 14, a record of a course of action taken by the airplane 10 on the basis of the data for detecting air turbulence, and an event actually encountered by the airplane 10 as the result of the action record, and reconstructs the data base from data sets obtained by combining the older data sets and the new data sets successively stored. In this manner, the accuracy of the results of prediction of events which may be encountered by the airplane 10 from data for detecting air turbulence can be improved.

Every time each base station 3 reconstructs the data base, it communicates the data sets and the data base to all the other base stations 3 through the base station interconnection cable 13, thereby enabling use of common data corresponding to the data sets and the data base between all the base stations 3.

In the above-described system, a pilot who operates the airplane 10 is needed to enable the airplane 10 to take a course of action. According to the present invention, a control signal may be transmitted from the base station 3 to the airplane 10 through the antenna 11 to operate the airplane 10, thereby preventing occurrence of human error in control by a pilot.

The above-described flying object navigation system according to Embodiment 8 of the present invention navigates one airplane 10 or two or more airplanes 10 on the basis of the data base held as common data for the airplanes 10, and is therefore capable of accurate prediction of events encountered by the airplanes 10. Also, the plurality of base stations 3 are provided to extend the controllable range of navigation of the airplanes 10.

Also, the above-described flying object navigation system according to Embodiment 8 of the present invention uses the laser radar air turbulence detector 14 to enable detection of the existence of turbulent air which is particularly obstructive to the travel of airplanes, and the airplane 10 can take a course of action to avoid such turbulent air to be navigated more stably and speedily.

Also, the above-described flying object navigation system according to Embodiment 8 of the present invention uses the laser radar air turbulence detector that transmits and receives laser light of a smaller beam width in comparison with air turbulence detectors or the like using electric waves, thereby enabling observation of the distribution of wind velocity and density at a higher resolution.

### Embodiment 9

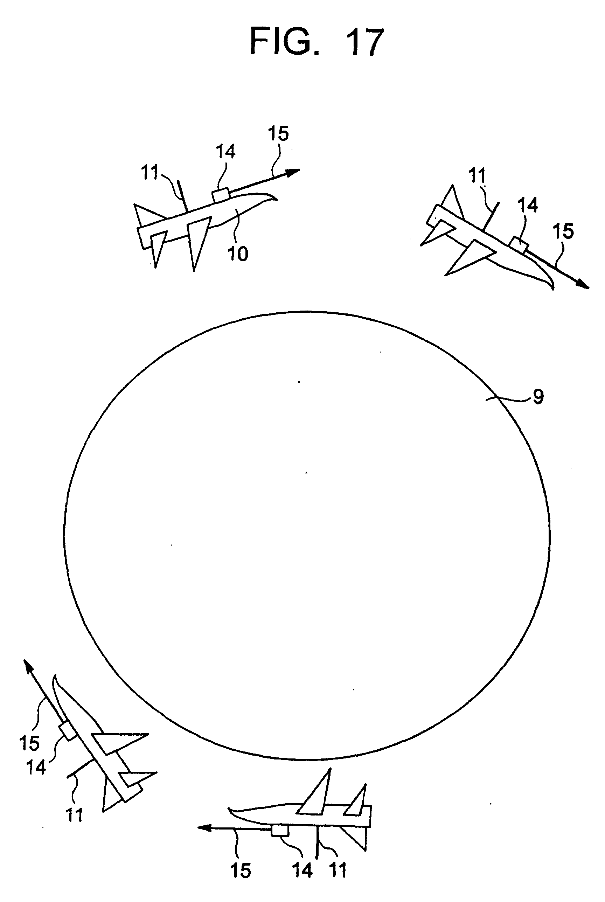

A flying object navigation system according to Embodiment 9 of this invention will be described with reference to Fig. 17. Fig. 17 is a configurational diagram showing the flying object navigation system according to Embodiment 9 of this invention.

Referring to Fig. 17, the airplane 10 has the antenna 11 and the laser radar air turbulence detector 14. The antenna 11 may be placed inside the airplane 10 or externally mounted on the airplane 10. The laser radar air turbulence detector 14 may be placed inside the airplane 10 or externally mounted on the airplane 10. The laser radar air turbulence detector 14 has a function of making observations on the earth 9 with respect to one or at least two of the significations of the words included in the signification of "meteorology".

Referring to Fig. 17, the plurality of airplanes 10 perform mutual wireless communication through the antennas 11. The airplanes 10 have functions of mutually transmitting and receiving data for detecting air turbulence obtained by observation with the laser radar air turbulence detectors 14 through the antennas 11.

To perform the wireless communication between the airplanes 10, electric waves, sound waves, or light waves of, for example, laser light are used as communication means. In particular, use of light waves as communication means enables high-speed and large-capacity communication and is effective in increasing the speed of communication between the airplanes 10.

Referring to Fig. 17, it is not necessary that any two of the plurality of airplanes be directly connected through the antennas 11, and some two of the airplanes 10 may be connected via one of the other airplanes 10.

In each airplane 10, data sets (see Fig. 2) constituted of all data for detecting air turbulence obtained in the past by observation with the laser radar air turbulence detectors 14 mounted on the airplanes 10 connected through the antennas 11, records of courses of action taken by the airplanes 10 on the basis of the data for detecting air turbulence, and events encountered by the airplanes 10 as the results of the action records are stored on a memory, although this storage is not illustrated.

Also, each airplane 10 has a data base (see Fig. 3) which is formed on the basis of the contents of the data sets stored on the memory, and in which data for detecting air turbulence obtained by observation with the laser radar air turbulence detectors 14, courses of action taken by the airplanes 10 after meteorological observations, and events encountered by the airplanes 10 as the results of taking the courses of action are related to each other.

Also, each airplane 10 has functions of making a search to ascertain which case in the data base data for detecting air turbulence obtained by observation with the laser radar air turbulence detector 14 mounted on it corresponds to, and predicting the relationship between a course of action taken by the airplane 10 and an event encountered by the airplane 10 as a result of taking the course of action.

Also, each airplane 10 has a function of transmitting the results of prediction to the other airplanes 10 through the antenna 11.

Also, each airplane 10 has functions of successively storing, on the memory, data sets constituted of data for detecting air turbulence obtained by observation with the laser radar air turbulence detector 14 mounted on it or the other airplanes 10, a record of a course of action taken by itself or by the other airplanes 10 on the basis of the data for detecting air turbulence, and an event actually encountered by itself or the other airplanes 10 as the result of the action record, and reconstructing the data base from updated data sets obtained by combining the older data sets and the new data sets successively stored.

Referring to Fig. 17, there are four airplanes 10. However, any number of airplanes 10 except zero may exist. If the number of airplanes 10 is larger, the extent of space through which navigation can be controlled is increased.

The operation of the flying object navigation system shown in Fig. 17 will next be described.

First, the objective meteorology is observed with the laser radar air turbulence detector 14 mounted on each airplane 10, and data for detecting air turbulence is transmitted and received between the airplanes 10 through the antennas 11.

Next, each airplane 10 receives through the antenna 11 the data for detecting air turbulence obtained by observation with the laser radar air turbulence detector 14, makes a search to ascertain which case in the data base the received data for detecting air turbulence corresponds to, and predicts the relationship between a course of action thereafter taken by the airplane 10 and an event encountered by the airplane 10 as a result of taking the course of action.

Then each airplane 10 can take a course of action to perform stable speedy flying on the basis of the results of prediction of the relationship between each course of action taken by the airplane 10 and the event encountered by the airplane 10 as a result of taking the course of action.

Records of courses of action taken by the airplane 10 and events thereafter encountered actually by the airplane 10 are successively transmitted to the other airplanes 10 through the antenna 11.

Then each airplane 10 successively stores, on the memory, data sets constituted of data for detecting air turbulence obtained by observation with the laser radar air turbulence detectors 14, a record of a course of action taken by each airplane 10 on the basis of the data for detecting air turbulence, and an event actually encountered by the airplane 10 as the result of the action record, and reconstructs the data base from data sets obtained by combining the older data sets and the new data sets successively stored. In this manner, the accuracy of the results of prediction of events which may be encountered by the airplane 10 from data for detecting air turbulence can be improved.

In the above-described system, a pilot who operates the airplane 10 is needed to enable the airplane 10 to take a course of action. According to the present invention, the airplane 10 may have a function of automatically taking a course of action for stable speedy flying on the basis of the results of prediction of the relationship between each course of action taken by the airplane 10 and the event encountered by the airplane 10 as a result of taking the course of action, thereby preventing occurrence of human error in control by a pilot.

The above-described flying object navigation system according to Embodiment 9 of the present invention navigates one airplane 10 or two or more airplanes 10 on the basis of the data base held as common data for the airplanes 10, and is therefore capable of accurate prediction of events encountered by the airplanes 10. Further, since the data base is provided in each airplane, the process from obtaining data for detecting air turbulence in each airplane 10 to determining a course of action to be taken can be performed in each airplane 10. Consequently, the time required to decide a course of action to be taken can be reduced to achieve stabler and speedier navigation.

Also, the above-described flying object navigation system according to Embodiment 9 of the present invention uses the laser radar air turbulence detector 14 to enable detection of the existence of turbulent air which is particularly obstructive to the travel of airplanes, and the airplane 10 can take a course of action to avoid such turbulent air to be navigated more stably and speedily.

Also, the above-described flying object navigation system according to Embodiment 9 of the present invention uses the laser radar air turbulence detector that transmits and receives laser light of a smaller beam width in comparison with air turbulence detectors or the like using electric waves, thereby enabling observation of the distribution of wind velocity and density at a higher resolution.

### Industrial Applicability

As has been described, a flying object navigation system according to the invention comprises a base station capable of storing information provided as common information for navigation of at least one flying object existing as a navigation object, the base station transmitting to the flying object necessary data from the information for determining a course of action to be taken by the flying object, on the basis of observation data from meteorological observation means for observing the meteorology of a space region in which the flying object is flying, the base station transmitting the necessary data by using communication means connected to the flying object. Information for navigation based on observation data is stored in the base station as common data for one or more flying objects, and this information is transmitted from the base station to the flying objects to enable navigation of the flying objects. Therefore, there is obtained an effect that a course of action to be taken by each flying object can be determined efficiently and speedily, and stable speedy navigation of the flying objects can be performed in such a manner as to be optimized even with respect to an event which occurs suddenly.

The flying object navigation system further comprises a flying object having the meteorological observation means, transmitting means for transmitting, to the base station, observation data obtained through observation by the meteorological observation means, and receiving means for receiving necessary data for determining a course of action to be taken, the necessary data being transmitted from the base station by using the communication means. There is obtained an effect that the meteorological observation means is provided in each flying object to enable closer observation of the meteorology in the vicinity of the flying object.

The base station has a memory for storing data sets constituted of all observation data obtained in the past through observation by the meteorological observation means, records of courses of action taken by the flying object on the basis of the observation data, and records of events encountered by the flying object as a result of the records of the courses of action. There is obtained an effect that data sets such as those described above are provided as common data for one or more flying objects, whereby an event which may be encountered by each flying object after observation with the meteorological observation means can be predicted from observation data obtained by the observation means.

The base station has a data base which is constructed on the basis of the contents of the data sets stored on the memory, and in which observation data obtained through observation by the meteorological observation means, a course of action taken by the flying object after meteorological observation, and an event encountered by the flying object as a result of taking the course of action are related to each other. There is obtained an effect that a data base is provided as common data for one or more flying objects, whereby an event which may be encountered by each flying object after observation with the meteorological observation means can be predicted more easily from observation data obtained by the observation means.

The base station has: a receiving section for receiving, through the communication means, observation data obtained through observation by the meteorological observation means; a prediction section for predicting the relationship between a course of action taken by the flying object and an event encountered by the flying object as a result of taking the course of action by making a search to ascertain which case in the data base the received observation data corresponds to; and a transmitting section for transmitting a prediction result obtained by the prediction section to the flying object through the communication means. There is obtained an effect that the flying object can take a course of action for the most stable and speedy navigation on the basis of the results of the prediction.

The base station has a function of successively storing, when data sets are newly formed, the new data sets on the memory, and a function of reconstructing the data base from the older data sets and the new data sets successively stored. There is obtained an effect that the accuracy of the results of prediction of an event which may be encountered by the flying object from observation data can be improved.

The base station transmits a signal for operating the flying object to control the operation of the flying object. There is obtained an effect that occurrence of human error in control by a pilot can be prevented.

The system is provided on each of a plurality of different stars, and the base stations respectively provided on the stars are connected by base station interconnection communication means. There is obtained an effect that data sets and a data base can be used in common to further extend the controllable range of navigation of the flying object.

The system is provided on each of a plurality of different stars, a central base station is provided among the plurality of stars, and the base stations respectively provided on the stars are connected to each other through the central base station. At the time of updating of data sets and a data base, the data sets and the data base may be temporarily returned to the central base station and thereafter transmitted to all the base stations. Thus, there is obtained an effect that common use of the same data sets and the same data base between all the base stations can be realized, thereby further extending the controllable range of navigation of flying objects.

A plurality of the base stations are provided on one star. There is obtained an effect that if the number of base stations is increased, the extent of space through which navigation of flying objects can be controlled can be increased. This is particularly advantageous in a case where two base stations are located at points on a star opposite from each other about a center of the star.

A plurality of the base stations provided on each star are connected to each other through base station interconnection communication means, and that, every time the data base is reconstructed, the data sets and the data base are transmitted between the base stations. There is obtained an effect that the data sets and the data base can be provided as common data to be used by all the base stations, thereby further increasing the controllable range of navigation of flying objects.

Each of the base station and the flying object has an antenna, and each of the communication means and the base station interconnection communication means performs wireless communication. There is obtained an effect that the degree of freedom of flying of the flying objects can be increased.

The flying object is an airplane. There is obtained an effect that stabler speedy navigation can be performed with respect to any flying objects flying in a space surrounding the earth and having a fair chance of use, e.g., passenger airplanes and helicopters.

The meteorological observation means comprises an air turbulence observation apparatus. There is obtained an effect that the existence of turbulent air which is particularly obstructive to the travel of airplanes can be detected.

An event encountered by the flying object includes changes in wind velocity with time in vertical and/or horizontal directions acting on the flying object. There is obtained an effect that it is possible to easily ascertain whether or not an airplane has plunged into turbulent air, as well as the scale of turbulent air when the airplane plunges into the turbulent air.

The communication means for performing wireless communication uses light waves. There is obtained an effect that high-speed and large-capacity communication can be performed and the communication speed can therefore be increased.

A plurality of the base stations are provided on one star and are connected by a base station interconnection cable. There is obtained an effect that communication with high efficiency can be realized, particularly, for example, in a situation where two base stations are located at points on a star opposite from each other about a center of the star.

The base station interconnection cable is formed of an optical fiber cable. There is obtained an effect that high-speed and large-capacity communication can be performed and the communication speed between the base stations can therefore be increased.

The air turbulence detector comprises a laser radar air turbulence detector. There is obtained an effect that transmitting and receiving of laser light of a small beam width enable observation of the distribution of wind velocity and density at a higher resolution.

The laser radar air turbulence detector has functions of transmitting laser light, receiving, as a received signal, scattered light caused by scattering of the laser light in the air, and observing the wind velocity from the Doppler effect in the received signal. There is obtained an effect that it is possible to detect turbulent air with the higher detection performance.

The laser radar air turbulence detector has functions of transmitting laser light, receiving, as a received signal, scattered light caused by scattering of the laser light in the air, and observing the density of air from the intensity of the received signal. There is obtained an effect that it is possible to detect turbulent air with the higher detection performance.

A flying object navigation system according to the invention comprises: at least one flying object existing as a navigation object; meteorological observation means for observing the meteorology of a space region in which the flying object is flying; and flying object interconnection means for interconnecting a plurality of the flying objects, characterized in that information provided as common information for navigation of the flying objects is stored in each of the flying objects, and a course of action to be taken by each of the flying objects is determined on the basis of the information and observation data from the meteorological observation means. Information for navigation based on observation data can be provided as common data for one or more flying objects, and navigation of the flying objects is performed on the basis of this information, so that there is obtained an effect that the accuracy of prediction of an event which may be encountered by each flying object is high. Since this information is held in each flying object, the process from obtaining observation data to determining a course of action to be taken can be performed in each flying object. Therefore, there is obtained an effect that the time required to decide a course of action to be taken can be reduced to achieve stabler and speedier navigation.

The meteorological observation means is mounted on the flying object. There is obtained an effect that it is possible to make a closer observation of the meteorology in the vicinity of the flying object.

The flying object has a memory for storing data sets constituted of all observation data obtained in the past through observation by the meteorological observation means mounted on the at least one flying object, records of courses of action taken by the flying object on the basis of the observation data, and records of events encountered by the flying object as a result of the records of the courses of action. Data sets such as those described above are provided as common data for one or more flying objects. Therefore, there is obtained an effect that an event which may be encountered by each flying object after observation with the meteorological observation means can be predicted from observation data obtained by the observation means.

The flying object has a data base which is constructed on the basis of the contents of the data sets stored on the memory, and in which observation data obtained through observation by the meteorological observation means, a course of action taken by the flying object after meteorological observation, and an event encountered by the flying object as a result of taking the course of action are related to each other. A data base is provided as common data for one or more flying objects. Therefore, there is obtained an effect that an event which may be encountered by each flying object after observation with the meteorological observation means can be predicted more easily from observation data obtained by the observation means.

The flying object has: a prediction section for predicting the relationship between a course of action taken by the flying object and an event encountered by the flying object as a result of taking the course of action by making a search to ascertain which case in the data base the received observation data obtained through observation by the meteorological observation means corresponds to; and a transmitting section for transmitting a prediction result obtained by the prediction section to another flying object through the flying object interconnection communication means. There is obtained an effect that the flying object can take a course of action for the most stable and speedy navigation on the basis of the results of the prediction.

The flying object has a function of successively storing on the memory data sets each constituted of observation data obtained through observation by the meteorological observation means mounted on the flying object or another flying object, a record of a course of action taken by the flying object or the other flying object on the basis of the observation data, and an event actually encountered by the flying object or the other flying object as a result of the record of the course of action, and a function of reconstructing the data base from updated data sets obtained by combining the older data sets and the new data sets successively stored. There is obtained an effect that the accuracy of the results of prediction of an event which may be encountered by the flying object from observation data can be improved.

The system is provided on each of a plurality of different stars, and the flying objects flying respectively near the stars are connected by the flying object interconnection communication means. There is obtained an effect that data sets and a data base can be provided as a common data to further extend the controllable range of navigation of flying objects.

The system is provided on each of a plurality of different stars, a central base station is provided among the plurality of stars, and the flying objects flying respectively near the stars are connected to each other through the central base station. At the time of updating of data sets and a data base, the data sets and the data base may be temporarily returned to the central base station and thereafter transmitted to all base stations, there is obtained an effect that common use of the same data sets and the same data base between all the base stations can be realized, thereby further extending the controllable range of navigation of the flying objects.

The flying object has an antenna, and the flying object interconnection communication means performs wireless communication. There is obtained an effect that the degree of freedom of flying of flying objects can be increased.

The flying object is an airplane. There is obtained an effect that stabler speedy navigation can be performed with respect to any flying objects in a space surrounding the earth and having a fair chance of use, e.g., passenger airplanes and helicopters.

The meteorological observation means comprises an air turbulence observation apparatus. There is obtained an effect that it is possible to detect the existence of turbulent air which is particularly obstructive to the travel of airplanes.

An event encountered by the flying object includes changes in wind velocity with time in vertical and horizontal directions acting on the flying object. There is obtained an effect that it is possible to easily ascertain whether or not an airplane has plunged into turbulent air, as well as the scale of turbulent air when the airplane plunges into the turbulent air.

The flying object interconnection communication means for performing wireless communication uses light waves. There is obtained an effect that high-speed and large-capacity communication can be performed, so that the communication speed can be increased.

The air turbulence detector comprises a laser radar air turbulence detector. There is obtained an effect that laser light of a small beam width is transmitted and received to enable observation of the distribution of wind velocity and density at a higher resolution.

The laser radar air turbulence detector has functions of transmitting laser light, receiving, as a received signal, scattered light caused by scattering of the laser light in the air, and observing the wind velocity from the Doppler effect in the received signal. There is obtained an effect that it is possible to detect turbulent air with the higher detection performance.

The laser radar air turbulence detector has functions of transmitting laser light, receiving, as a received signal, scattered light caused by scattering of the laser light in the air, and observing the density of air from the intensity of the received signal. There is obtained an effect that it is possible to detect turbulent air with the higher detection performance.

## Claims

1. A flying object navigation system comprising a base station capable of storing information provided as common information for navigation of at least one flying object existing as a navigation object, said base station transmitting to said flying object necessary data from said information for determining a course of action to be taken by said flying object, on the basis of observation data from meteorological observation means for observing the meteorology of a space region in which said flying object is flying, said base station transmitting said necessary data by using communication means connected to said flying object.

2. A flying object navigation system according to claim 1, further comprising a flying object having said meteorological observation means, transmitting means for transmitting, to said base station, observation data obtained through observation by said meteorological observation means, and receiving means for receiving necessary data for determining a course of action to be taken, the necessary data being transmitted from said base station by using said communication means.

3. A flying object navigation system according to claim 1, wherein said base station has a memory for storing data sets constituted of all observation data obtained in the past through observation by said meteorological observation means, records of courses of action taken by said flying object on the basis of the observation data, and records of events encountered by said flying object as a result of the records of the courses of action.

4. A flying object navigation system according to claim 3, wherein said base station has a data base which is constructed on the basis of the contents of said data sets stored on said memory, and in which observation data obtained through observation by said meteorological observation means, a course of action taken by said flying object after meteorological observation, and an event encountered by said flying object as a result of taking the course of action are related to each other.

5. A flying object navigation system according to claim 4, wherein said base station has:
a receiving section for receiving, through said communication means, observation data obtained through observation by said meteorological observation means;
a prediction section for predicting the relationship between a course of action taken by said flying object and an event encountered by said flying object as a result of taking the course of action by making a search to ascertain which case in said data base the received observation data corresponds to; and
a transmitting section for transmitting a prediction result obtained by said prediction section to said flying object through said communication means.

6. A flying object navigation system according to claim 5, wherein said base station has a function of successively storing, when data sets are newly formed, the new data sets on said memory, and a function of reconstructing said data base from the older data sets and the new data sets successively stored.

7. A flying object navigation system according to claim 5, wherein said base station transmits a signal for operating said flying object to control the operation of said flying object.

8. A flying object navigation system comprising a flying object navigation system according to claim 1, wherein said system is provided on each of a plurality of different stars, and said base stations respectively provided on the stars are connected by base station interconnection communication means.

9. A flying object navigation system comprising a flying object navigation system according to claim 1, wherein said system is provided on each of a plurality of different stars, a central base station is provided among the plurality of stars, and said base stations respectively provided on the stars are connected to each other through said central base station.

10. A flying object navigation system according to claim 1, wherein a plurality of said base stations are provided on one star.

11. A flying object navigation system according to claim 10, wherein the plurality of said base stations provided on each star are connected to each other through base station interconnection communication means, and that, every time said data base is reconstructed, the data sets and the data base are transmitted between said base stations.

12. A flying object navigation system according to claim 1, wherein each of said base station and said flying object has an antenna, and each of said communication means and said base station interconnection communication means performs wireless communication.

13. A flying object navigation system according to claim 1, wherein said flying object is an airplane.

14. A flying object navigation system according to claim 1, wherein said meteorological observation means comprises an air turbulence observation apparatus.

15. A flying object navigation system according to claim 1, wherein an event encountered by said flying object includes changes in wind velocity with time in vertical and/or horizontal directions acting on said flying object.

16. A flying object navigation system according to claim 12, wherein said communication means for performing wireless communication uses light waves.

17. A flying object navigation system according to claim 12, wherein a plurality of said base stations are provided on one star and are connected by a base station interconnection cable.

18. A flying object navigation system according to claim 17, wherein said base station interconnection cable is formed of an optical fiber cable.

19. A flying object navigation system according to claim 14, wherein said air turbulence detector comprises a laser radar air turbulence detector.

20. A flying object navigation system according to claim 19, wherein said laser radar air turbulence detector has functions of transmitting laser light, receiving, as a received signal, scattered light caused by scattering of the laser light in the air, and observing the wind velocity from the Doppler effect in the received signal.

21. A flying object navigation system according to claim 19, **characterized in that** said laser radar air turbulence detector has functions of transmitting laser light, receiving, as a received signal, scattered light caused by scattering of the laser light in the air, and observing the density of air from the intensity of the received signal.

22. A flying object navigation system comprising:
at least one flying object existing as a navigation object;
meteorological observation means for observing the meteorology of a space region in which said flying object is flying; and
flying object interconnection means for interconnecting a plurality of said flying objects,
**characterized in that** information provided as common information for navigation of said flying objects is stored in each of said flying objects, and a course of action to be taken by each of said flying objects is determined on the basis of said information and observation data from said meteorological observation means.

23. A flying object navigation system according to claim 22, **characterized in that** said meteorological observation means is mounted on said flying object.

24. A flying object navigation system according to claim 23, **characterized in that** said flying object has a memory for storing data sets constituted of all observation data obtained in the past through observation by said meteorological observation means mounted on said at least one flying object, records of courses of action taken by said flying object on the basis of the observation data, and records of events encountered by said flying object as a result of the records of the courses of action.

25. A flying object navigation system according to claim 24, **characterized in that** said flying object has a data base which is constructed on the basis of the contents of said data sets stored on said memory, and in which observation data obtained through observation by said meteorological observation means, a course of action taken by said flying object after meteorological observation, and an event encountered by said flying object as a result of taking the course of action are related to each other.

26. A flying object navigation system according to claim 25, **characterized in that** said flying object has:
a prediction section for predicting the relationship between a course of action taken by said flying object and an event encountered by said flying object as a result of taking the course of action by making a search to ascertain which case in said data base the received observation data obtained through observation by said meteorological observation means corresponds to; and
a transmitting section for transmitting a prediction result obtained by said prediction section to another flying object through said flying object interconnection communication means.

27. A flying object navigation system according to claim 26, **characterized in that** said flying object has a function of successively storing on said memory data sets each constituted of observation data obtained through observation by said meteorological observation means mounted on said flying object or another flying object, a record of a course of action taken by said flying object or the other flying object on the basis of the observation data, and an event actually encountered by said flying object or the other flying object as a result of the record of the course of action, and a function of reconstructing said data base from updated data sets obtained by combining the older data sets and the new data sets successively stored.

28. A flying object navigation system according to claim 22, **characterized in that** said system is provided on each of a plurality of different stars, and said flying objects flying respectively near the stars are connected by said flying object interconnection communication means.

29. A flying object navigation system according to claim 22, **characterized in that** said system is provided on each of a plurality of different stars, a central base station is provided among the plurality of stars, and said flying objects flying respectively near the stars are connected to each other through said central base station.

30. A flying object navigation system according to claim 22, **characterized in that** said flying object has an antenna, and said flying object interconnection communication means performs wireless communication.

31. A flying object navigation system according to claim 22, **characterized in that** said flying object is an airplane.

32. A flying object navigation system according to claim 22, **characterized in that** said meteorological observation means comprises an air turbulence observation apparatus.

33. A flying object navigation system according to claim 32, **characterized in that** an event encountered by said flying object includes changes in wind velocity with time in vertical and horizontal directions acting on said flying object.

34. A flying object navigation system according to claim 32, **characterized in that** said flying object interconnection communication means for performing wireless communication uses light waves.

35. A flying object navigation system according to claim 32, **characterized in that** said air turbulence detector comprises a laser radar air turbulence detector.

36. A flying object navigation system according to claim 35, **characterized in that** said laser radar air turbulence detector has functions of transmitting laser light, receiving, as a received signal, scattered light caused by scattering of the laser light in the air, and observing the wind velocity from the Doppler effect in the received signal.

37. A flying object navigation system according to claim 35, **characterized in that** said laser radar air turbulence detector has functions of transmitting laser light, receiving, as a received signal, scattered light caused by scattering of the laser light in the air, and observing the density of air from the intensity of the received signal.
